# EUROPEAN PATENT SPECIFICATION

(11) **EP 1 370 997 B1**
(45) Date of publication and mention of the grant of the patent: **16.07.2008**
(21) Application number: 02707768.4
(22) Date of filing: 12.02.2002
(51) Int. Cl.: G06F 21/00, G11B 20/00, H04N 7/167, H04N 7/173

(54) **VIDEO DISTRIBUTION SYSTEM**
VIDEOVERTEILUNGSSYSTEM
SYSTEME DE DISTRIBUTION VIDEO

(30) Priority: 12.02.2001 US 781679; 12.02.2001 US 781680
(43) Date of publication of application: 17.12.2003
(60) Divisional application: 07121822.6
(73) Proprietor: Ochoa Optics LLC, Las Vegas, NV 89119 (US)
(72) Inventor: BALLOU, Bernard, L., Jr., Raleigh, NC 27614 (US); SPARKS, Kelly, C., Raleigh, North Carolina 27613 (US); HEBRANK, John, H., Durham, NC 27712 (US); HUNTER, Charles, Eric, Hilton Head Island, SC 29928 (US)
(74) Representative: Viering, Jentschura & Partner
(86) International application number: PCT/US2002/004040
(87) International publication number: WO 2002/065750

(56) References cited:
- JP-A- 2002 015 333
- US-A- 5 619 247
- US-A- 5 822 291
- US-A- 5 915 018
- US-A- 5 991 399
- US-A- 6 025 868
- US-A- 6 081 785
- US-A1- 2002 057 799
- US-A1- 2002 073 038

## Description

### Field of the Invention

The invention relates to a method and a system according to the preamble of claim 1 and claim 14, respectively. Accordingly, the invention generally relates to video distribution systems and, more particularly, to a system wherein movies and, optionally, other video content are distributed to consumers in a secure format on digital media such as optical disks for playback via proprietary set-top boxes.

### Description of the Prior Art

Method and system of the above-mentioned type are known, e.g., from US-A-5 619 247 which, inter alia, discloses the billing of clients only after a program is actually watched or listened to US-A-5 991 399 describes a method of distributing data comprising: generating an asymmettic key pair of a public key and a private key; encrypting predetermined data with the generated public key; and building an executable tamper resistant key module including the generated private key and the encrypted predetermined data. This document also describes a trusted player which an identify itself with a manifest containing a unique identifier, eg serial number. US-A-5 822 291 also discloses disc based players with credit advances and user/device ID nos.

Widespread home television viewing began in approximately 1950 with broadcast networks transmitting shows on specific, pre-published schedules. This model remained the primary model for television viewing for over thirty years.

Cable, and later direct broadcast satellite, increased the number of channels. But viewers were still subject to programming schedules.

Video cassette recorders offered the prospect of shifting viewing times, provided the end user was one of the thirty percent or less of VCR owners who learned to program their VCR's. Even among those who learned to program their VCR, time shifting via VCR remains subject to properly setting up the timer, assuring the power is in the correct state, assuring that a correct tape is in the VCR, that the tape is not full, that the tape is properly rewound, etc. Thus, for the majority of TV viewers, even at the turn of the century, the TV viewing model has scarcely changed from the mode of 1950.

Video rental stores have provided a sort of "video on demand", subject, of course, to the high cost of video cassette purchases by the rental stores, as well as the high capital outlay for real estate (land and building) and the cost of labor at the stores. Even when a title becomes available through video release, the viewer's ability to watch the show at his chosen time is subject to availability of the video at the store, round-trip transportation to the store and the inevitable problems with late returns, damaged videos, lost videos, etc.

True video-on-demand has been envisioned whereby massive video servers would be positioned in every geographic location to transfer high speed video data streams to the houses of individual viewers at any time a viewer wished to access a particular movie or other content. However, this type of video on demand system, after years and billions of dollars of investment, has proven to be too complex and expensive and, therefore, has not been implemented.

Another type of on-demand video distribution system is described in U.S. Patent No. 5,832,287, whereby video-on-demand and network programming is provided from master file and network program databases through multiple community systems, each of which may serve up to approximately one hundred homes.

An interactive viewing system that automatically records selected programs is disclosed in U.S. Patent No. 5,805,763. However, the '763 system simply provides another mechanism for recording television programs. This system attempts to simplify the VCR recording function, but because of its complex nature and limited benefits it has not been implemented.

U.S. Patent Nos. 5,619,247 and 6,025,868 disclose a stored program pay-per-play system wherein movies are stored on storage media for later playback, with the subscriber paying only when a particular movie is viewed.

For movie distribution companies to maximize the profits from a movie, it is necessary that a large number of viewers pay to see the movie, that a reasonable price is charged, and that ancillary costs such as advertising and theater commissions be minimized. The strategy of selling movies as VCR's or DVD's in entertainment stores such as WalMart, Circuit City and Blockbuster produces a relatively low volume of sales because of the high prices associated with the outright purchase of the movies. Similarly, movie rentals realize revenues each time a movie is rented, although profits must be shared, advertising still must be done, and piracy of movies through copying rented tapes reduces revenues. Similar drawbacks exist for cable and satellite pay-per-view movie channels.

Thus, there is an acute need in the video distribution industry for a system that will provide each individual viewer with ready access to thousands of movies titles (as well as, optionally, educational programming, classic network programming, audio programming, classic sporting events, and the like) in a convenient low-cost manner that fully satisfies user demand, while enhancing the economic incentives of content providers to create and distribute an ever expanding offering of movies and other video/audio content.

### Summary of the Invention

To this end, the invention provides a method according to claim 1 and a system according to claim 14. Further embodiments of the invention are described in the dependent claims.

The present invention provides a video distribution system that is beneficial to both consumers and movie distribution companies ("content providers"). Consumers are free to collect and archive movies at low cost or even no cost, and later make a decision as to which movies to actually view paying a viewing fee for those movies that are actually viewed. Consumers may view the videos at any time without restraints related to broadcasting schedules and with no need to return the videos to a rental store (although return credits may be offered). There are no late fees. New movie releases may be made available in sufficient quantities so that they are unlikely to be "sold out", as they frequently are in existing video rental stores. Another advantage to consumers is the ultimate lower cost occasioned by the system's reduction of the real estate and labor costs associated with existing video rental stores. Because literally thousands of movies may be made available, the video distribution system of the invention may provide a greater selection than existing video rental stores. The invention may also provide improved access to content for those who live in geographically remote and/or sparsely populated areas that may presently have little or no access to video rental stores. In certain embodiments, the present invention also provides the ability to update movie pricing at any time, for example on a daily, weekly or monthly basis, so that consumers can choose to view movies at times when content providers offer pricing specials or incentives.

Content providers recognize a very significant benefit in that they receive income every time a movie is played, thereby creating significant residual value for their investments. Importantly, new release movies may be made available in large numbers during initial peak demand when pricing power is the highest. The mentioned residual value translates into increased income for the content providers because a significant portion of existing content is available for viewing every day. The invention may be carried out in such a way as to allow content providers to change pricing at any time, e.g., daily/weekly/monthly, to optimize price vs. consumer demand. This provides an extremely high benefit by effectively allowing the market to clear (i.e., real demand matches supply), something that the current video distribution model (TV, movie channels, cable/satellite pay-per-view, DVD clubs and video rental) do not provide.

More particularly, the present invention employs a strategy for maximizing revenues to content providers by creating a large number of viewers who pay a fee each time they view a movie, and relies on an extension of word-of-mouth advertising, customer archiving of movies and other means to maximize the number of viewings.

This system distributes movies in the form of digital movie disks that can only be played on a low-cost set top box that monitors and invoices/debits viewers each time a movie is played on a box. In certain preferred embodiments, movies are stored in compressed form on digital media such as low-cost, proprietary 2 gigabyte optical disks with multiple layers of protection to prevent piracy. The proprietary optical disk recording and playback technology may take the form of multilevel (ML) CD recording and playback technology developed and commercialized by the ML Alliance, or other suitable technology. Disks with movies are distributed to viewers in a manner that minimizes wasted media while maximizing number of plays through targeted distribution of the disks.

In preferred embodiments, movies are stored in compressed form on digital media that have sufficient storage capacity to store multiple compressed movies, for example, 2 to 10 movies, or up to 20, 50 or even 100 movies or more. In one embodiment consistent with the invention, the digital media are in the form of near-field optical disks substantially as described in U.S. Patent Nos. 5,910,940; 6,094,413 and 6,115,348 and the attached Appendix A, IDC White Paper entitled "Calimetrics' Multilevel Technology Enables High-Performance CD/DVD Recorders", IDC, Framingham, Massachusetts, USA (2000), incorporated herein by reference. Near-field disks may be produced at about the same size and of the same or similar material as conventional music or computer CD's or DVD's. Near-field technology allows more data to be placed on a disk by incorporating internal lenses that reduce the effective size of a laser spot allowing half the track pitch of a DVD and shorter inter-pit distances along the track than a normal DVD. A normal DVD holds about 4.7 gigabytes of information, a two-sided near-field disk the same size can hold about 20 gigabytes of information. With refinements, near-field disks may hold more than 100 gigabytes of information as shorter wavelength lasers become available and other technologies such as multi-level (ML) DVD technology are combined with near-field technology. ML technology has been developed and has been commercialized by the ML Alliance, comprising Calimetrics, Inc. of Alameda, California, USA; TDK; Mitsubishi Chemical; and Plextor. The ML technology is described in U.S. Patent Nos. 5,235,587; 5,818,806; 5,854,779; 6,115,348; 6,148,428; and 6,150,964, incorporated herein by reference, and the attached Appendix A.

Data can be placed on near-field disks by writing or pressing, similar to CD RW or pressed CD's. The cost to create a pressed CD is about $0.20 and the cost to produce a written CD is closer to the cost of the media or about one dollar per disk. The estimated cost of a two-sided near-field disk created by pressing is about twice the cost of pressing a single-side CD. Because current video compression technology allows a VHS quality movie to be stored in less than 2 gigabytes, the cost of storing ten movies on a 20 gigabyte near-field disk would be about $0.50 or about $0.05 per movie (plus shipping and handling).

Reading a pressed near-field disk can be both low-cost and proprietary.due to the similarity of these readers to mass-produced DVD players. As described in the above-mentioned U.S. Patent Nos. 5,910,940; 6,094,413 and 6,115,348, each of which is incorporated herein by reference and the attached Appendix A, modifications to a DVD player to read a near-field disk includes slight modifications to the distance between the optical head and the disk, and an additional chip (or additional functionality on the servo chip) to properly recognize the near-field track and read all the data on a side.

It is particularly important to the business system described herein that disks are readable only on viewing systems that can monitor, control and bill based upon the number of movies viewed. The requirement of having to track the near-field spiral assures that a special purpose chip, or special modifications to the servo chip are needed to read the disk. Furthermore, header codes can be placed in disks during manufacture, for example in the wobble-track, to assure that only readers containing the proprietary tracking chip read these movie disks. Additionally, the video material on the disk can be encrypted by any number of conventional or unconventional methods to assure that a digital copy of the movies is not available to pirates.

The reader/player box must also be able to monitor, control and charge the customer based upon the number of plays of a movie. This may be done in a number of ways. In certain preferred embodiments, the player communicates the playing of a movie, the movie's ID and the viewer ID to the system operator's central computer system on a real-time, daily or weekly basis over a cell or a normal telephone connection. Alternately, credit may be communicated to a box by a mag strip, an external communication strip, an Internet connection or other suitable means. Credit may be extended to a reader box, or viewer prepayments may allow viewing multiple movies without having to initiate a billing operation.

Targeted distribution of the disks may take place, at least in part, through widely geographically dispersed "distribution agents" who copy disks on machines capable of reading and making copies of the disks. In the case of the ML disks and other similar technologies, disk copying by agents is possible for a low cost because the proprietary optical disk technology permits the disks to be read and written by the same mass-market mechanical hardware used to read and write CD-R and RW disks. The ability to read and write to the mentioned ML disks is accomplished by addition of a single, proprietary chip to an otherwise normal CD device. Current ML writers can replicate a 2-hour movie disk in about six minutes. With the addition of a small disk-feed mechanism, a distribution agent can create 100 copies in a ten-hour period.

Reader/writers are distributed to agents who then make copies of the digital media (e.g., ML movie disks) and give away or sell these disks at modest cost to people likely to watch the movies. Distribution agents may include college students who make copies and give them to friends, movie clubs that send disks for a small fee to club members, traditional movie rental stores that sell or give away the disks or any appropriate retail outlet such as consumer electronics stores and properly equipped convenience marts.

In certain preferred embodiments, each disk contains an identification code for the agent that created and distributed the disk. Each time the disk is viewed, the agent can be paid for the viewing. At the same time agents may be charged a nominal amount for the raw optical disk media. Thus, it is in the agent's interest to maximize the number of viewings of each disk.

Multiple distribution systems for the movie disks are possible, including club mailings to members; sale at local movie rental stores (e.g., Blockbuster), convenience stores or large retail stores (e.g., Walinart); loans or transfers of disks from friend to friend; as part of a purchase of a reader box; or random mailings. Various of these methods have many advantages of scale. The distribution methods may also make use of known customer profiles in order to target different niches of customers. Because revenues may be realized from this system at two different points, the original sale of disks and the playing of movies, prices can be adjusted to encourage distribution through different markets. For example, bulk pressed disks may be sold to a Quickie Mart convenience store for $0.50 a disk with the Quickie Mart selling the disk for $1.00, and the system operator might receive an average of $2.00 a movie per play. The system operator may find it advantageous to reduce the price of bulk disks to stores to encourage more aggressive marketing and increase the per-play revenues.

The system allows the value of movies to change over time, e.g. during the first week after release a movie may cost $10.00 per play, then revert to $2.00 per play, and finally after it is several years old, perhaps $0.50 per play. This can be accomplished by a date code on the disk and a clock in the player, and appropriate price schedules on the disk for each movie or downloaded from a central system at the time of playing.

There are also multiple ways of setting and communicating the per-play price of a movie. This information may be written on the outside of the disk, or the player may reference the movie ID number to an internal database and communicate that value to the viewer via the TV screen. Similarly, if the system uses special credit cards to play a movie, similar to phone cards now sold, then these cards may contain the rates for different movie categories and viewing periods.

The movie distribution and customer movie archiving models of the present invention offer the opportunity for the system operator to offer both new release movies and classic/older movies through a movie club. Upon joining the club a member receives a reader box if he does not already have one and thereafter, on a regular basis such as monthly, receives a single multi-movie disk (or two or more disks, if necessary) that contains the new release movies for that time period. Preferably, the cost of pressing the disks and shipping/handling are covered in whole or substantial part by the member's dues to the club, although free distribution of the new release disks may be justified in the case of members who have a recent history of frequent pay-per-view use of the system. The shipment of the monthly new release disks may be timed so that some or all of the movies on the disk are available to members before the movies are available at video rental stores or through cable/satellite pay-per-view or cable/satellite movie channels. Members are free to watch the movies as desired with payment to the system operator being made according to one of the billing scenarios described elsewhere herein. The monthly disks are archived in the member's movie library so that over time the monthly disks alone create a substantial library. In addition to monthly movie disks, members may order disks containing multiple classic/older movies that appeal to the member, for example, a disk containing all of the *James Bond* movies or a disk with ten Julia Roberts movies or twenty World War II war movies, or several disks containing all new release romantic comedy movies from the last three years (or any time period). These disks are also available at low cost or even no cost to approved members. Thus, a member can easily, quickly and at low cost assemble a personalized movie library with hundreds of titles. All of the movies are always readily accessible and ready for playing, resulting in vastly improved viewing choices for members, a vast new source of income to content providers for residual properties, and a steady flow of income to the system operator and related parties.

Many viewers desire the ability to archive movies, perhaps to create a large personal library that may be used by themselves, by friends or children or, for example, by renters at a beach cottage. The distribution of movies on low-cost, long-lived media encourages this. The cost of the physical material that makes up the digital media may be on the order of about $1 or less, similar to the raw cost of bulk VCR cassettes, however, the cost of placing a movie on such a disk is much lower since CD write mechanisms are cheaper than cassette write mechanisms, and the duplication time is faster by a factor of twenty or better.

Players for the movies may include a CD reader with a proprietary chip that allows reading, a decoding/ decompression/ watermarking chip, an accounting computer and some form of communication to the video distribution system operator to allow compensation to the content providers and to the agent who created the copy that was viewed.

Several features of this system discourage piracy. In the first instance, it will be appreciated that raw copying of disks can only enhance revenues since these disks can be played only on authorized boxes equipped with the proprietary chip. These boxes can be designed not to work if proper credit or connections is not established by the box with the video distribution system operator. Unauthorized recording of a movie with a recording device (e.g. VCR) connected to a box output is discouraged by watermarking that encodes the identification of the playback box in the video and/or audio signals that are sent to the viewer's TV. Extraction of the digital form of the movie is minimized by several layers of protection, including creating a proprietary reader for the movies, decrypting the movie, and decompressing it with the proper algorithm.

Decryption can be further hindered by requiring a decryption key specific to a reader that must be obtained from the central system each time a movie is viewed. Furthermore, the decryption key may be date dependent to further limit the development of a hacking scheme that would allow any user to obtain decryption software (as has been the situation with DVD movies). Should a single individual obtain a digital copy of the movie and distribute it, internal identification tags allow the source of the movie to be identified.

An optional additional feature of the system is the use of identification tags on pressed movie disks that identify the seller of the disk and allow rewarding the original seller of the disk. Such identification tags may be read by a disk reader, a bar code reader internal or external to the player, or by the person requesting to view the movie.

In one aspect, the invention is carried out under authority of content providers who control the distribution rights to movies. Under this authority, digital movie disks are delivered to widely geographically dispersed distribution agents. Distribution agents produce copies of the movie disks, with each copy including an identification code that identifies the distribution agent who made the copy. The movie disk copies are distributed by the distribution agents to customer households that have playback devices compatible with the disks. Customer households are permitted to view desired movies through their playback devices. The customer households communicate movie playback information that identifies each movie that has been viewed and a distribution agent who is responsible for the movie being distributed to the customer household. As dictated by the movie playback information, the content providers and responsible distribution agents are compensated.

### Brief Description of the Drawings

Some of the features of the invention having been stated, other features will appear as the description proceeds, when taken in connection with the accompanying drawings, in which:

Figure 1 shows video distribution system components in a customer household connected to the central controller of the video distribution system operator;

Figure 2 is a schematic representation of primary components of the play only set-top box shown in Figure 1;

Figure 3 is a block diagram of the primary components of the movie disk reader box shown in Figure 1;

Figure 4 is a chart illustrating a sample transaction between a customer's reader box and the video distribution system operator's computer;

Figure 5 is a block diagram of one simplified embodiment of a business model for commercializing a video distribution system consistent with the invention;

Figure 6 is a block diagram of one simplified embodiment of a business model for commercializing a video distribution system consistent with the invention; and

Figure 7 is a block diagram of another business model that utilizes distributors to distribute some substantial portion of the movie disks to consumers.

### Detailed Description of the Invention

While the present invention will be described more fully hereinafter with reference to the accompanying drawings, in which aspects of the preferred manner of practicing the present invention are shown, it is to be understood at the outset of the description which follows that persons of skill in the appropriate arts may modify the invention herein described while still achieving the favorable results of this invention. Accordingly, the description which follows is to be understood as being a broad, teaching disclosure directed to persons of skill in the appropriate arts, and not as limiting upon the present invention.

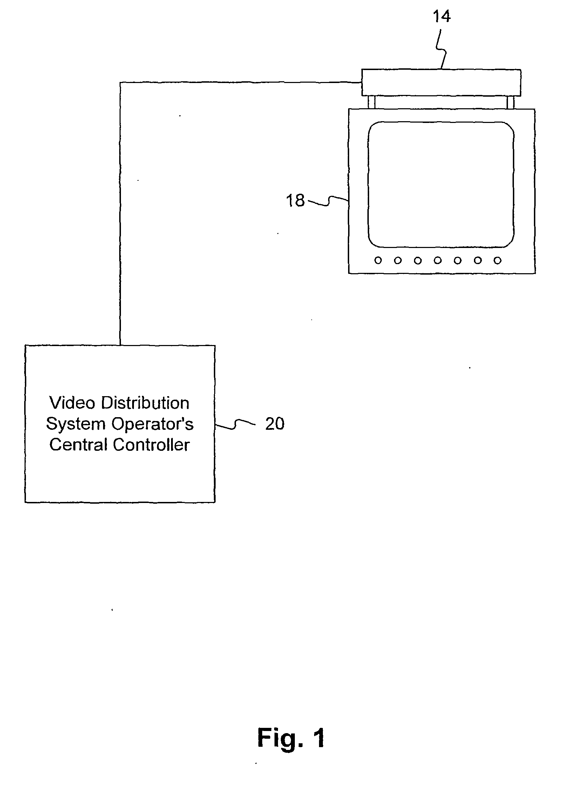

Figure 1 is a diagram of the video distribution system components in a customer household. These components include a movie disk reader in the form of a play-only set-top box 14 for playing proprietary disks that are distributed in accordance with the invention. Set-top box 14 is connected to a video display device such as television 18. Box 14 is also connected to the central controller 20 of the distribution system operator.

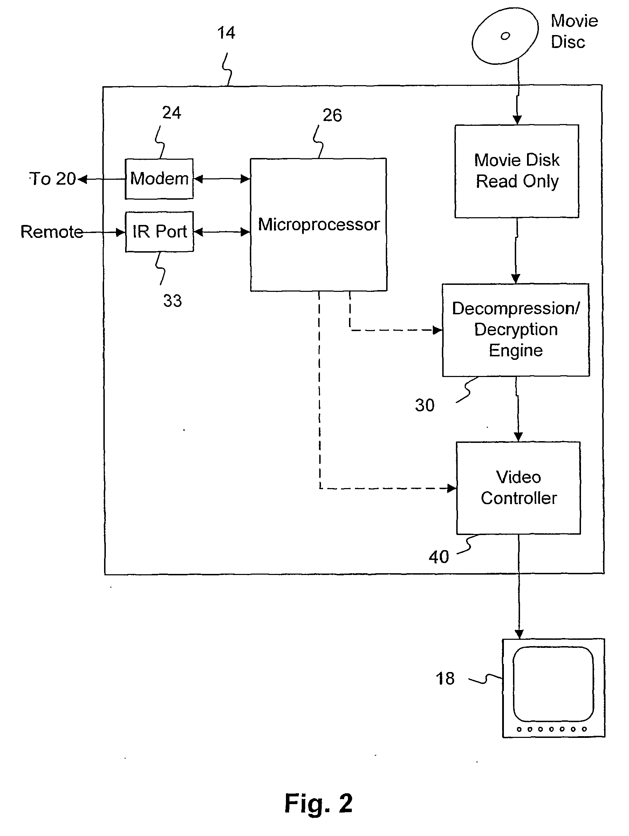

Referring to Figure 2, box 14 has the capability to communicate with central controller 20 to conduct billing transactions resulting from movie playback on the box (or simple extension of "credit" to the box) and to communicate agent ID information. This communication may be accomplished through modem 24 (Figure 2) that is connected to a standard POTS phone line, a DSL or ethernet port connected to a digital network or an internal cell phone. In the future, the communication may be possible by transmissions from box 14 to central controller system 20 via satellite. Similarly, where appropriate, box 14 may use the communication capabilities of the customer's satellite or cable box to achieve connection with the central computer system.

Microprocessor 26 within box 14 conducts the data transfer and communication functions of the box. This includes directing or handling the content bit-streams in or out of decompression engine 30, as well as communications with IR remotes (via IR part 33) and modem 24.

Video controller 40 functions to take the digital output from decompression engine 30 and convert the output into a conventional video signal.

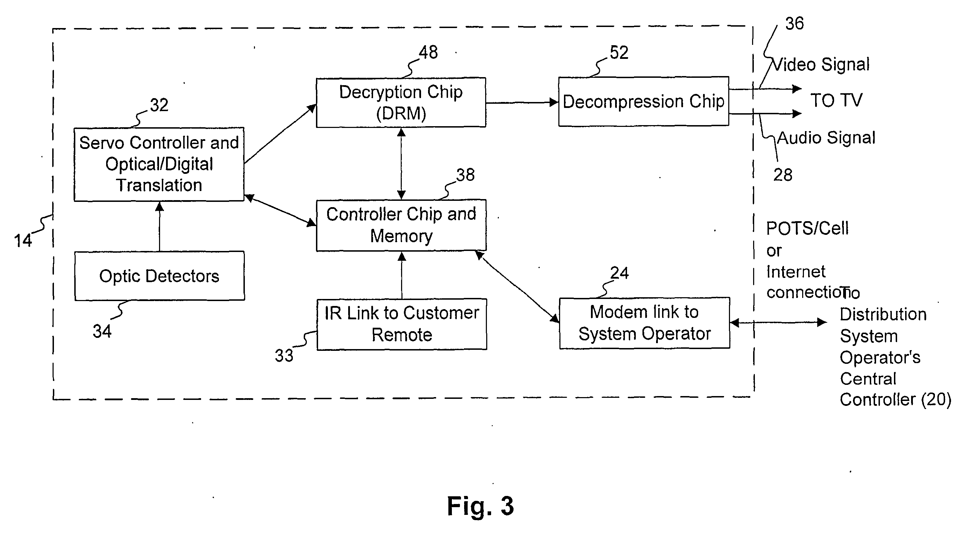

Referring to Figure 3, there is shown a block diagram depicting another embodiment of set-top box 14. Box 14 has outputs 36, 28 to a TV, although portable movie disk reader boxes may contain their own screen and speakers or headphones. Box 14 contains optics and optoelectronics similar to a DVD reader. The servo controller and optical/digital translation chip 32 (servo chip) powers the motor, spins the disk and provides radial and head positioning signals. Signals to steer the servo come from a conventional quad detector DVD optical detector system 34 that allows tracking by comparing the intensities of the signals received by multiple detectors. Unlike a normal DVD, near-field disk tracking requires finer resolution of signals from multiple tracks. This system of reading near-field disks is detailed in the attached Appendix A and U.S. Patent Nos. 5,910,940; 6,094,413 and 6,115,348. A controller chip and memory module 38 instructs the servo to move to tracks containing the material to be viewed. Controller chip and memory module 38 also conducts accounting, digital rights management (DRM) and communication functions with both the viewer and the video distribution system operator. Viewer information is communicated through messages sent to the TV screen (or audio channel if voice synthesis is included) and viewer responses are received through an infrared (IR) link 33. Communication with the video distribution system operator may be conducted at daily or weekly intervals and occurs over a modem link 24, or alternatively, via an internet or credit card connection, or other suitable means. The memory of module 38 allows it to store billing and DRM information.

Movies are both compressed and encrypted. A decryption chip 48 for DRM does decryption and a decompression chip 52 converts the compressed video and audio to viewable movies.

One preferred proprietary optical disk read/write system for use in accordance with the present invention is a system employing multilevel (ML) CD recording and playback technology developed and commercialized by the ML Alliance, comprising Calimetrics, Inc. of Alameda, California, USA; TDK; Mitsubishi Chemical; and Plextor. The ML technology is described in U.S. Patent Nos. 5,235,587; 5,818,806; 5,854,779; 6,115,348; 6,148,428; and attached 6,150,964, incorporated herein by reference and the attached Appendix A, IDC White Paper entitled "Calimetrics' Multilevel Technology Enables Higher-Performance CD/DVD Recorders", IDC, Framingham, Massachusetts, USA (2000).

The ML optical disk has the same geometry and pit spacing as a conventional CD, but achieves approximately three times the storage capacity as a CD by allowing each pit (or "data cell") to communicate three bits of information by means of variations in the intensity of reflected light ("gray scales"). By being the same size and tolerances as conventional CD's, the pressing costs of ML disks are similar to the low costs of pressing a conventional CD. ML disks are superior storage media to CD's since their 2 gigabyte capacity as compared to 0.65 gigabytes allows storage of a full-length movie with VHS quality via commercially available video compression techniques such as MPEG-2, MPEG-4 or other proprietary compression techniques such as those developed and used by Sorenson Media, without the complexity of multiple disks with attendant user issues and possible pauses as disks are changed.

Readers for ML disks are mechanically identical to CD readers since ML disks and CD's share the same track and pit geometry, and can be read with the same lasers and photodetectors. Thus ML readers such as reader box 14 of Figures 1, 2, and 3 can be brought to market quickly for low cost by well developed CD reader manufacturing companies.

Writers for ML disks may be mechanically identical to CD writers since ML disks and CD's share the same pit and track geometry and can be written with the same laser diodes. Unlike CD writers, however, pits of different reflectance must be written on ML disks to create the necessary gray scale. This is accomplished by controlling the duration and/or number of light pulses from the laser during the write process in conjunction with utilizing a writable surface that is responsive to these pulses in such a manner as to create the gray scale of reflectances at the pits, all of which may be accomplished in accordance with the technologies of the mentioned ML Alliance.

Readers and writers for ML players require signal processing electronics that is both more advanced and proprietary than the electronics used in association with conventional CD's, allowing the ML disk system to be more secure than conventional music and video recording systems. At the first level of security, ML disk gray-scales are unreadable by conventional CD or computer readers, since these devices output just one bit per pit, and signal processing is required to interpolate the gray scales of pit reflectance into three-bit digital data. The signal processing is accomplished in an ML reader by an ASIC (application specific integrated circuit) employing proprietary methods of calibrating the signal as well as the use of proprietary codes to minimize bit errors due to occasional errors in differentiating between adjacent grays such as described in U.S. Patent 6,148,428, "Method and apparatus for Modulation Encoding Data for Storage on a Multi-Level Optical Recording Medium". The proprietary ASIC converts the analog photodetector output to a 3-bit or more digital signal based upon calibration data that is included in each frame of data. The ASIC chipset also implements the error reduction techniques as described in the '428 patent. This chipset also can be designed to block the outputting of data frames that contain specific header information. Thus, ASIC's may be produced for different applications that reliably protect information. For example, the ASIC used in an ML reader/writer for computer use may be designed so that it will refuse to output data from any frame containing the bit combination "V". ASIC's used with the set-top boxes 14 of the present invention may have an ASIC that only outputs frames with an "V" in the frame header. Thus, to read the video from an ML disk with any reader but a chip specifically designed for such a set-top box would require a complex ASIC that would be both difficult and illegal to produce.

As mentioned above, ML technology provides a 3X improvement over conventional CD storage capacity using existing optics, mechanics and manufacturing infrastructure, while also offering write speeds at 3X current CD write speeds, for example, write speeds of 36X to 60X, and above. Additionally, the ASIC chipset for writing and reading ML-encoded disks provides backwards compatibility with legacy CD's. Thus, in certain preferred embodiments of the present invention, a read/write system employing ML technology may be made even more versatile by providing an additional write capability that permits writing conventional CD's (0.65 gigabytes) so that the read/write system can write CD's readable by any conventional CD player, in addition to writing proprietary ML disks.

Distribution agents who make authorized copies of the movie disks will have a proprietary (e.g. ML) disk duplication box (not shown). The box may take the form of a dual well box (two CD drives) having the capability to copy proprietary optical disks for distribution in the manner described elsewhere herein. In the alternative, distribution agents, particularly some of those who are home-based, may use a personal computer having an appropriate proprietary disk burner to reproduce proprietary CD-type optical disks as discussed below. In one embodiment, multi-level (ML) DVD technology may be combined with near-field technology.

As described in detail elsewhere herein, security of the recorded content is of utmost importance to the system operator and the content providers. According to the present invention, the system operator has a unique advantage to implement any number of security measures. Using proprietary ML technology and a unique ASIC chipset designed specifically for the system operator, the security measures available for the recorded content may include:
1. Digital rights management via a standardized software protocol such as offered by InterTrust Technology Corporation of Santa Clara, California, USA;
2. Watermarking;
3. Custom tailored compression technologies;
4. Encryption;
5. ML proprietary technology;
6. Unique ASIC chipset for implementing the ML technology for the system operator.

It will be appreciated that the enhanced storage capacity and write speeds associated with ML technology increase the attractiveness of producing standard or custom video CD's for system customers. CD's so produced at customer request are added to the customer's video archives. As mentioned above, a full-length movie may be stored on a single ML CD. (Or, approximately 30 compressed record albums may be stored on a single ML CD.) Furthermore, as described in the ML technology literature identified above, ML technology may be extended in the future to DVD media to increase DVD storage capacity and write speeds by 3X or more. ML DVD technology may be used in accordance with the invention when available.

### Digital Rights Management

Protection against piracy and unpaid viewing is keenly important to the content providers. Piracy protection may be accomplished at several levels within the system. First, preferably the media and disk readers are nonstandard and proprietary. For example, the near-field disks described above cannot be read by a normal DVD player or DVD computer drive due to the higher densities, closer track pitches of the disks and slightly different optics of this system.

Second, each movie preferably is encrypted before storage by a proprietary encryption scheme that requires multiple pieces of information to successfully decode a movie. Each digital rights management (DRM) decryption chip 48 has a unique identification number. (In some designs of the system where the decryption chip and controller chip are linked in such a way so that hackers cannot monitor data flow between the two chips, such as by potting, the controller chip may contain this unique ID number.) Additionally, when movie disk reader box 14 contacts the computer of the video distribution system operator by modem (or otherwise), a second unique identification code is transmitted to the system operator that allows the system operator to look up the individual box's DRM code number. Using this code number and a transaction number (or random number) from box 14, and remembered by the box, the system operator creates a DRM code and sends that back to box 14 along with instructions for the amount of available credit that the box can draw upon before having to reconnect with the system operator. Thus, knowing a general DRM code will not work with individual boxes, and knowing a DRM code specific to one box will not work sequential times since the box changes and transmits a new transaction number to the system operator each time credit is applied for. Thus for a controller/DRM to successfully decode a movie they must know a code that is unique to the chip and unique to a number that the chip generated and sent to the system operator.

A third level of protection may be acquired through a proprietary compression algorithm. The algorithm may be a variation on a common decompression algorithm or even may be specifically developed in its entirety for this purpose. Additionally, the algorithm may also have aspects of decompression that allow a form of watermarking to be done on the video and/or audio of a movie. The watermark may allow some level of determination of what box or disk a movie originated from in the event that movies are recorded from the analog data stream sent to the TV monitor.

### Communication between a Box and the System Operator

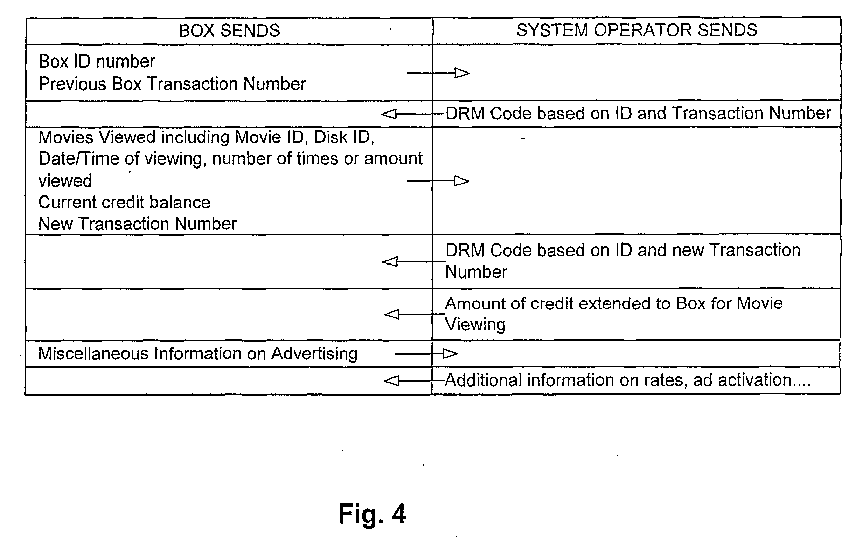

Communication between movie disk reader box 14 and the system operator may accomplish several functions, some of which are optional: extension of credit to the box so that multiple movies may be viewed before having to connect again; accounting from the box to the system operator to let the system operator know what movies have been watched for properly crediting a viewer's account; acknowledging the distributor who supplied the disk; compensating the content providers for their movie that was watched; and refreshing the box's DRM codes as previously discussed. A typical communication between a movie disk reader box and the system operator's computer is detailed in Figure 4. Note that after the system operator and box have established that each other are both part of the system and achieved communication, the box uniquely identifies itself with its ID number and the last transaction number that it had previously sent the system operator. Cross validation can occur by the system operator regenerating and resending the DRM code that was previously generated for this box ID and transaction number. Once positive identification is confirmed, the box can send movie viewing information including the ID's of the movies viewed and their disk ID's (should the system be set up to reward distributors of disks), the date/time that each movie was viewed in the case that part-day pricing be in effect, the current credit balance, and finally a new box-generated transaction number. The system operator then sends back to the box a new DRM number based on the new transaction number, and a new credit balance. Depending upon the method of charging for partially viewed movies that information may also be sent to the system operator. Similarly, if the system is adapted to interactive advertising this information may be sent to the system operator (or new advertising material may be sent to the box).

Special box/system operator communication may occur as a part of interactive advertising placed on a disk, or for special billing situations such as an extremely recent movie where the per-view fee is changing.

Communication is typically initiated by the box in order to refresh its credit, update current movie cost structures or to do a routine check-in.

### Playing a Movie Disk from the Customer's Point of View

A person who wishes to watch movies from the system typically begins the process by going to a store that sells system-authorized movie disk reader boxes. The box may come with several disks of recent movies with labels on them indicating what movies are on each disk. The activation process begins by the customer calling the system operator's phone operator and giving their name, phone number, billing address, a credit card number and the serial number of the box they have just purchased. Optionally, there may also be an agreement about the amount to be prebilled to the credit card and limits of credit extended to the box. The customer also selects a personal identification number (PIN) for the box and can have a PIN for each person using the box.

The next step is to plug in the box and allow it to contact the system operator via a modem connection through the user's phone, its internal cell phone or via an Internet connection. When the box connects to the system operator it sends its ID number and a transaction number. In return the box receives an amount of credit extended to the box, a DRM key, a short file that lists current exceptions to the pricing rules, and a file that indicates special rates available to the customer for particular movies based upon the number of times the customer has previously viewed the movie:

The above interaction may be done with a TV connected to the box or without the TV.

Next the customer connects the reader box to a TV set (and plugs the box into a wall socket for power). Note that in this embodiment, connections to the phone or Internet only need to be done when credit is low or when a new user is authorized to use the box, such as in the case where a box is sold or given away or another member of the family receives their own PIN and credit account.

To watch a movie from a disk, the customer turns on the TV and inserts the disk in the reader box. On a menu system the TV displays the titles of the movies on the disk, as well as the current prices in effect for each movie. The credit available in the viewer box is also displayed. Movies may be different prices depending upon which pricing category the movie is coded for. If there is a promotional sales price for a particular movie or if the system operator provides discounts for movies that the customer has viewed before, the box indicates a revised price for that movie. In this embodiment, the number of viewings of each movie is information that resides in the box and also in the system operator's database that can be downloaded to any new box that is put into use. Depending upon a customer's billing plan, family members may get per-play discounts based upon anyone on the account viewing a movie. Other billing plans may not make each user aware of movies watched by other users.

Using the IR remote, in preferred embodiments the customer can navigate the menu and find out more about each movie on the disk such as a review, actors or even view a trailer for a movie. Interactive ads may also be available, for example, other Dustin Hoffman movies on other disks may be advertised, or reference to a franchised marriage counseling service may be provided with local phone numbers. In case the customer is interested, the interactive ad may yield a short course on the marriage counseling process. After selecting a movie, the movie begins to play. At any time the customer can pause the movie, and, to a limited extent, replay portions of the movie in case of a brief unexpected interruption. Should the movie be totally interrupted, perhaps by a power outage or a neighbor dropping in, sufficient credit may be extended that allows the customer to finish viewing the movie at a later time, perhaps any time in the next seven days. These rules are covered in the billing plan that the particular customer selects and can be reviewed on the screen at any time.

When the movie is finished the customer can retrieve the movie disk from the reader box and place it in his library or give it to a friend. The record that a customer has watched a particular movie is stored in the reader box and will be uploaded to the system operator's central computer the next time the box is connected for communication to the system operator.

After having watched several movies, the reader box will let the customer know his credit balance the next time it is turned on. Should the credit extended to the box be low, reconnection to the system operator's computer can be used to refresh the credit. Should the box be lost or damaged, a phone call to the system operator will let the customer deactivate that box from his account and any remaining credit in the box can be returned to the customer's account. If the customer does not reconnect the box to the system operator's computer for more credit, the box only allows the customer to view free movies, menus and ads on a disk. If a person owns several boxes, typically credit must be individually extended to each box.

It will be appreciated that in addition to having the ability to play movies using the system operator's disk format as described above, reader boxes of the invention may also be provided with the ability to read a number of other disk formats such as DVD, CD, CDR and CD RW, as well as a number of data formats such as DVD VOB file formats, PCM (standard CD formats), Microsoft audio and MP3 files. These additional reader capabilities provide a more versatile and useful set-top box for consumers who may desire these features.

### Pay-Per-Play Options

Many pay-per-view pricing options are possible with the system of the invention.

Typically, each movie disk contains a data table that indicates the pricing category for each movie on the disk. The category for each movie is established by the content provider prior to production of the disk. Categories may range from "recent blockbuster" to "old one-star". In some cases a movie may be listed in several categories with start dates for each category. Pricing categories may have generic names, but may also merely be pricing structures that different movies are listed under.

Within non-volatile memory in the reader box are two other pricing tables. The first table, the standard pricing table, and lists the pricing rules for each movie category for this customer. For example, a customer who is a member of the "System Operator Movie Club" might have a per-play price for an "old one-star" as $0.20 per play declining $0.05 for each play, and a pay-to-own price of $0.85. Another customer might have a completely different pricing table based upon his viewing history or the plan that customer entered with the system operator. The second table lists "Exception Pricing", and all or part of it may be updated with each connection to the system operator. Exception pricing lists individual movie prices that override the standard price structure. Exceptions may include sales or promotions on recent movies or movies that have new prices based upon viewer history. For example, after a customer's child has watched "Babe, The Pig" for the tenth time, that movie can be played on this particular box without further charge. Note that the Exceptions Pricing table may be updated by the system operator's computer based upon movie viewing data that is uploaded from the box to the system operator's computer in the same transaction.

From the customer's point of view there are several different per-play options. The simplest option is to watch a movie for a per-play amount listed in the disk menu. The customer may notice or even be told in the menu screen when a movie declines in price because it has been viewed one or more times previously on this box or account. A customer may even choose the option of buying the movie so that when this movie is selected, there will be no per-play fee. This option is particularly appropriate for children's movies where a disk can be left in a player and a child can activate a movie by choosing it from the screen. A purchased movie can be viewed without having to enter a PIN number, and under certain plans, a purchased movie can be played on another reader box provided a special purchaser ID code is entered via the user's remote. Other purchase options may include buying rights for unlimited views of a movie over a certain period of time, for example, two days or a week.

### Billing Options

As described above, certain embodiments of the invention involve the reader box communicating with a computer of the system operator to receive credit at the box based upon an account established with the user of the box and the system operator. In these embodiments, preferably DRM keys are downloaded for use when credit is extended to the box form the central system.

Alternative embodiments are possible for situations in which regular connection to a central computer system is not easily possible or not desirable. Examples of these situations include portable players for use to play movie disks in cars, public players on airplanes and players included with the rental of a vacation home. Other examples include individuals who are adverse to using the system operator's central computer system or who do not possess a charge card for transferring money to the central system. In these situations, activation cards can be purchased by system customers in a store, like phone cards, and communicate a standard pricing structure and available e credit to the customer. Pricing structures may also be stored in the player. Credit on such cards is billed (reduced) at the start of each per-play viewing.

Two examples of distribution agent operations follow:

### EXAMPLE I

An individual such as a high school or college student owns an in home duplication system that he purchased as part of a general ML CD duplicator box (dual well). Optionally, the additional cost of incorporating the ML chips into the box may be underwritten by the video distribution system operator. The box plays ML video disks as well as copies them. The box may be supplied to the distribution agent with ten to twenty movies and a large number of blank movie disks. When a movie is watched on the box, the box is invoiced by a communication system in the same manner as a movie watched on a play-only box as shown in Figures 1, 2, and 3. The connection establishes the billing and conveys the identification of the distribution agent who is the source of the disk.

The student may burn multiple copies of a new movie he enjoyed and give it to friends who have proprietary ML boxes such as box 14 of Figures 1, 2, and 3. Some portion of the revenues from each movie viewing is returned to the student. The return is in the form of movie viewing credits, free media selections of more movies to be shipped to the student, or other suitable reward. The student may also be "paid" by free music CD's or other gifts as once existed in cigarette clubs or credits that could be used for internet use or purchases.

### EXAMPLE II

A Quickie Mart convenience store rents, sells and/or gives away proprietary ML movie disks and, perhaps, player boxes that return revenues to the Mart as movies are played on them. Disks that are sold may be sold for, say, 50 cents each with $.25 credit for disks returned without scratches. The Mart maintains a stock of several hundred disks with a small computer system that predicts sales of "hot" disks and urges the owner to copy more. The copy device may be used on a "while you wait" basis by customers, looking much like a jukebox and running on quarters or returned CD's. Similarly, the store owner may have a larger ten-disk ML burner in the back of the store. The burner may have been originally purchased, but is rapidly paid for by credits to the store owner as disks copied by the burner are played by customers and their boxes send the store's ID code into the system operator's central billing system. Additionally, the Quickie Mart may also rent portable players for vacation trips or just for a week's use. The rental box may come with a set number of prepaid viewings, for example, ten viewings, with the customer being refunded for unused viewings when the box is returned. In the alternative, the Mart owner may simply loan a dozen movie disks to the rental box customer. Many variations of rent, trade, and recycle strategies are possible, underwritten by the per-view revenues back to the store and possible subsidy of hardware from the distribution system operator. Consumers are frequently lured by such a maze of incentives, much like the lure of lotto tickets or cell phone rentals.

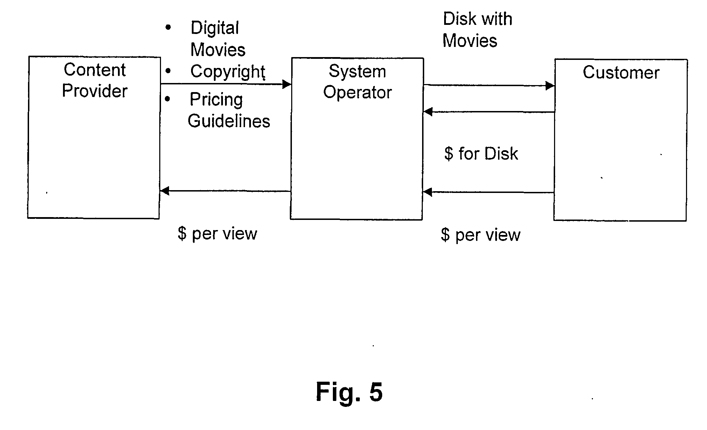

The present invention provides flexibility with respect to the business model to be used to commercialize the invention. In one simplified embodiment, shown in block diagram form in Figure 5, the video distribution system operator interfaces with two parties: content providers and customers. The content providers provide the content (e.g., movies) to the system operator along with necessary copyright license and pricing guidelines. The system operator places multiple movies securely on disks in collections that maximize the probability that a customer will view several of the movies on the disk. The system operator may also add advertising to the disk for additional movies on this or other disks and other products. The system operator also optionally underwrites the operation of the entire system, provides the invoicing system and makes reader boxes available to customers. Customers are people who attach themselves to the system, most commonly by joining to acquire a reader box. Customers may be enticed to join through a club membership much like in a record club by paying some relatively small initial fee. The system operator sends the customers' disks. Customers pay the system operator for the opportunity to view a movie on the disk. The system operator then pays the content providers according to contracts mostly based upon the number of times a movie was watched and the age and popularity of the movie.

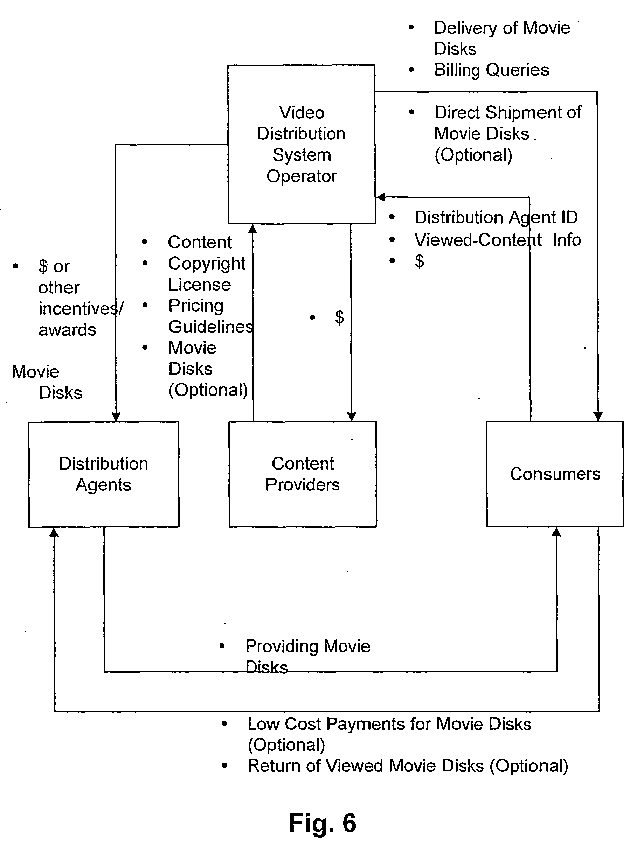

In one embodiment, shown in block diagram form in Figure 6, the video distribution system operator interfaces with three parties: content providers, distribution agents and consumers. The content providers provide the content (e.g., movies) to the video distribution system operator along with the necessary copyright license and pricing guidelines. The content may be delivered in any suitable digital form, including delivery of fully encoded proprietary optical disks. The system operator is responsible for producing or having produced large numbers of movie disks for distribution to the various classes of distribution agents, as well as having the option of directly shipping movie disks to consumers via direct customer orders, a "record club" model, or the like. The distribution agents are responsible for providing movie disks to customers in the various ways described above. While many of the distribution agents preferably have the capability for on-site duplication of music disks, some or all of the distribution by some agents may be a pass through of pressed disks received directly from the system operator. When consumers view movies, viewed-content information and distribution agent identification information are sent to the system operator by communication means as described above, with or without billing queries initiated by the system operator. Consumer payment is made to the system operator by credit card, direct billing, as additional purchases on a cable or direct broadcast satellite account, or other suitable payment means. The system operator, in turn, pays royalties to the content providers and provides compensation to the distribution agents in the form of cash or incentives/rewards. It will be appreciated that in certain embodiments, the invention may be carried out in substantial part without duplication of movie disks by distribution agents, with many of the disks being pressed by the system operator and/or content providers or parties under their control.

In those instances where multiple copies are made by different agents before a particular disk reaches a consumer, the agent payments to the responsible distribution agents may be divided equally among all agents in the copy chain, or, more preferably, payments may be made in a sort of pyramid arrangement with the distribution agents closer to the consumer receiving greater credits than those further upstream.

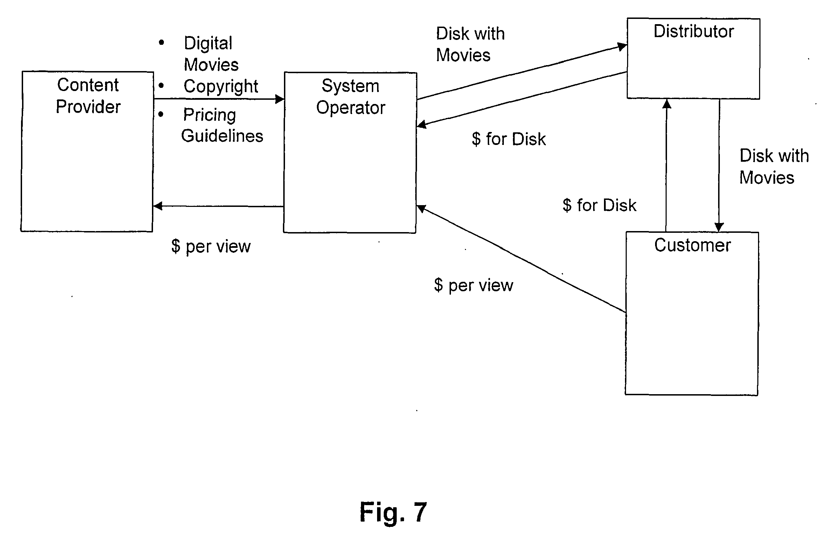

Figure 7 shows a more complex system where various distributors are used to get movie disks in the hands of customers. Distributors may be large chain stores, like Walmart, smaller local stores like a convenience store, or even an individual person who distributes. Here, the system operator may bulk ship pressed disks to the distributor and charge the distributor an amount that may be greater than or less than the cost of the media, recording and shipping, according to a method that maximizes the probability that individuals will acquire disks that they will play. Similarly, the customer may pay a fee for the disk that is usually more than the cost of the disk to the distributor. In the case of a convenience store, the store may pay $0.30 per disk and sell each disk of ten movies for $1.00. Obviously, distributors may sell disks for less than they paid for them in promotional efforts for another product. When a movie is viewed, the viewer's payment goes directly to the system operator and not the distributor, although system operators may reward distributors for situations in which large numbers of movies on disks they distributed are viewed.

It will be appreciated that the invention may be carried out in conjunction with other distribution strategies for delivering content to the customer households. In this regard, the invention may be carried out in conjunction with a digital movie distribution system whereby movies are blanket broadcast by direct broadcast satellite, cable or other means to set-top boxes that record movies according to the customer's dictates or preferences, thus giving the customer the option of receiving content in the form of physical delivery of movie disks or by digital download to his set-top box. Digital movie distribution systems that may be used in conjunction with this invention are described in commonly assigned U.S. Patent Application Serial No. 09/385,671, filed August 27, 1999; Serial No. 09/436,281, filed November 8, 1999; Serial No. 09/476,078, filed December 30, 1999; Serial No. 09/502,069, filed February 10, 2000; Serial No. 09/553,524, filed April 20, 2000; Serial No. 09/645,087, filed August 24, 2000; Serial No. 09/675,025, filed September 28, 2000; and Serial No. 09/737,826, filed December 15, 2000. The disclosures of these U.S. applications are disclosed in corresponding published PCT applications, PCT/US01/05675 and PCT/US00/23410. These applications describe various features of video distribution systems that have application to this invention, including various security measures for protecting content.

As movie distribution according to this invention moves into the homes of millions of viewers, providing an updated guide and index of what is available in the viewers' home libraries becomes an ever increasing need. To this end, according to the invention, a CD-based in-home entertainment guide may be provided to system customers. The CD-based guide can be updated from the internet, wireless, phone connection, other data transmission, or by physical replacement, enabling the customer to place the guide CD into the player unit and scroll through all the movies available to him, including movie information like pricing, ratings, previews, reviews, rankings, actor and actress information, behind the movie footage, etc. With the guide CD installed, the player will compare the digital rights purchase by the customer, and give the customer a choice of listing all movies available, just the ones he currently has rights for, or any number of other categories, like rating, theme, actor or actress, date, author, etc. The customer puts the guide CD into the unit and a graphical menu of his desired information is displayed on the connected TV, video screen, or other monitor source. From this menu, the customer finds out what movies are available and will be given the specific CD number or index where the movie or other entertainment can be found. With this information the customer can easily find the right CD he is interested in. While online TV guides exist, many customers will not have access to digital cable, the Internet, or direct broadcast satellite service. In addition, since the present invention does not depend upon broadcast TV, the in-home entertainment guide represents a significant component of a system designed to achieve overall customer satisfaction and convenience of use.

Additionally, the in-home entertainment guide can be updated with current advertisements that are highlighted based on the customer's current view of the entertainment content. The guide may also become a local ordering vehicle for the customer to easily request new entertainment or entertainment packages via the playback device back-channel over wireless, phone, Internet or other communication medium.

### Summary of Certain Features of the Invention

It will be appreciated that the present invention provides a significantly superior method of movie distribution by giving away, or selling for a low cost, disks containing up to 20, 50, 100 or more movies that are played in a secure system that charges the customer a viewing fee only for movies they choose to watch. The invention increases the likelihood that a customer's viewing needs will be met and increases the effectiveness of movie marketing. As described above, the invention is made possible in large part by the twin technologies of video compression and high-capacity optical disks that can store multiple movies on a disk.

Distribution of movie disks containing multiple movies is advantageous to the customers, distributors, the content providers and the system operator in many ways, including the following. For the customer, the system allows creating a low-cost library of movies that can be watched at any time. By having multiple movies on a disk, the library is both more compact (useful for taking movies on a vacation) and simpler to access since fewer disks are necessary for a library. Access becomes very simple where 20, 50, 100 or more movies are placed on a disk. For the system operator, multiple-movie disks allows reduced media, packaging, and shipping costs or low-volume, low-cost stockpiling of materials for sale. Intermediate distributors (e.g., convenience stores, movie rental stores) when used, receive revenues for selling the disks. Like the video rental industry, capital costs of creating an outlet are quickly repaid so that the owners of many retail stores, gas stations and convenience stores become distribution points. One of the features of this invention, when distribution includes intermediate distributors, is the ability to pay or reward a distributor when the customer plays a movie, providing a continuing source of revenue to the owner of a small store and encouraging them to continue their sales effort. Content providers find this system beneficial because it entices a customer to sample or play a movie on a disk selected for another movie. For example, a disk containing the war movie *Platoon* might also have similar attractions like *Deer Hunter, Apocalypse Now,* or even a movie from a previous generation like *The Dirty Dozen.* Thus, the content provider may realize revenues for both the movie that originally attracted the customer as well as other movies including some second tier or older movies that the customer might not otherwise purchase or rent. The system operator can receive revenues from the original sale of the disk and/or a portion of the per-play revenues. The system operator may also choose to place advertising within the disk to allow additional revenues. Because of the large capacity of the disk and communication capabilities of the players, there is the possibility of interactive advertising to be done.

While the present invention has been described in connection with certain illustrated embodiments and terminology, it will be appreciated that modifications may be made without departing from the true spirit and scope of the invention. In this regard, the term "movies" as used herein is deemed to encompass not only full-length feature films, but also content such as classic sporting events (e.g., Super Bowls), popular TV series (e.g., episodes of *Star Trek* or *Seinfeld* or *I Love Lucy),* or any other video content suitable for distribution. Similarly, it will be appreciated that the terms "digital movie media", "digital movie disks", "movie disks" and the like as used herein are not limited to CD, DVD, CD-like and DVD-like optical disks, but may encompass other optical media as well as magnetic and other media suitable to store movies in digital form.

While proprietary CD-like media such as the above-described "ML" media may be preferred for the reasons stated herein, other media such as the optical storage media of Dataplay Company, USA may be utilized. Also, standard CD's recorded on one or both sides, preferably with sufficient data compression to enable a movie to be stored on a single CD, may be used.

### CALIMETRICS' MULTILEVEL TECHNOLOGY ENABLES HIGHER-PERFORMANCE CD/DVD RECORDERS

### An IDC White Paper Analyst: Wolfgang Schlichting

### Introduction

MultiLevel (ML) recording technology represents an exciting new development in optical data storage. This technology has the potential to solve the cost and backward-compatibility issues that have prevented greater-than-CD capacity optical recording from becoming widely adopted.

Initial ML drives target a threefold increase in CD capacity to 2GB per disc and a 36x CD or 5.4MBps data transfer rate for writing (based on a 12x standard CD spindle rate), thereby providing much higher-speed recording than any CD or DVD system has been able to deliver to date. Future CD and DVD products based on ML will be able to easily incorporate technology improvements and continue to stay ahead of the industry's technology road map.

The combination of these factors opens up new applications for the optical data storage market, as higher-capacity and higher-speed recording at low cost essentially runs the CD-R/RW drive from a digital photocopying machine for duplicating audio CDs into:
- A true high-performance data storage peripheral for the PC
- A high-capacity, high-performance, and low-cost medium for digital video editing
- In small form (50-80mm), an exciting new way for CD technology to be used in handheld, portable, and Internet appliance applications

In addition, ML technology has gained the support of several major companies in CD and DVD recording. Calimetrics and TDK have formed the ML Alliance to commercialize ML technology. Mitsubishi Chemical and Plextor have joined this alliance.

### Optical Storage Overview

The optical storage market can be divided into three areas: CD, DVD, and other optical technologies, including magneto-optical (MO) and proprietary phase-change technologies.

CD formats have reached true mass-market volumes. CD-ROM drives have shipped in most PCs for the last five years. CD-R/RW has expanded CD-ROM's success into the rewritable market. Already in 1999, it outshipped the low-end removable magnetic drives (primarily lomega's Zip and SuperDisk) in its peak year, reaching 17.2 million units worldwide.

DVD, which will ultimately replace CD, is also on the verge of reaching mass-market levels. DVD-ROM will lead the way for DVD recorders once the installed base of compatible DVD-ROM drives is comparable to current CD-ROM levels. The market shares for all other optical formats are small in comparison (see Figure 1).

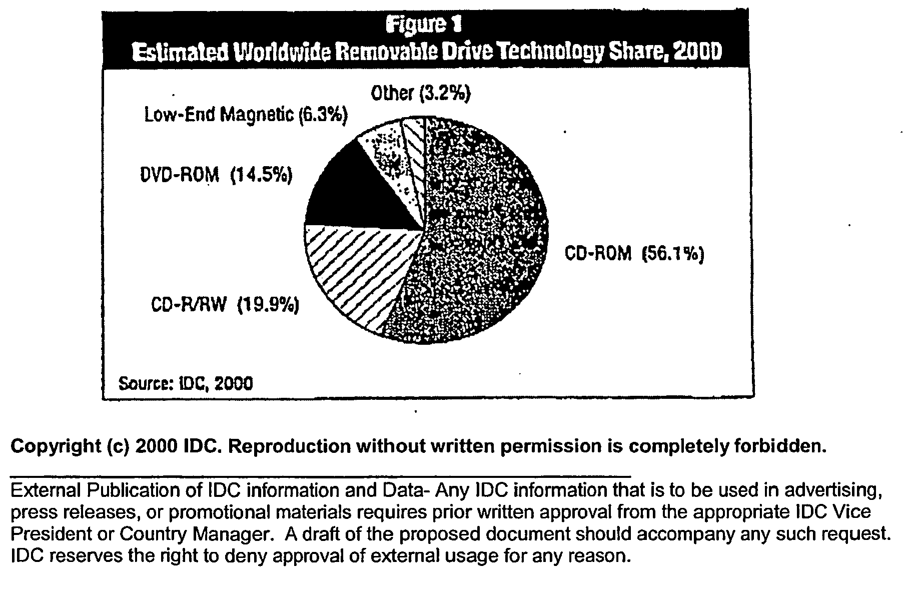

### CD and DVD Formats

As shown in Figure 2, IDC's forecast of the 120mm optical market calls for additional significant unit growth exceeding 250 million in 2004. The addition of the CD-write and the DVD-read features to the basic CD-ROM drive will be the two major trends in the market for the next five years.

Clearly, CD-ROM compatibility will be the basis to which additional features can be added. IDC believes that CD-ROM volumes will peak in 2000 and that we will see a gradual decline as more and more mainstream PCs ship with CD-RW or DVD and only the very price-sensitive low end of the PC spectrum ship with just a CD-ROM drive. Some corporate PCs in particular will stay with CD-ROM because it is sufficient for software installation.

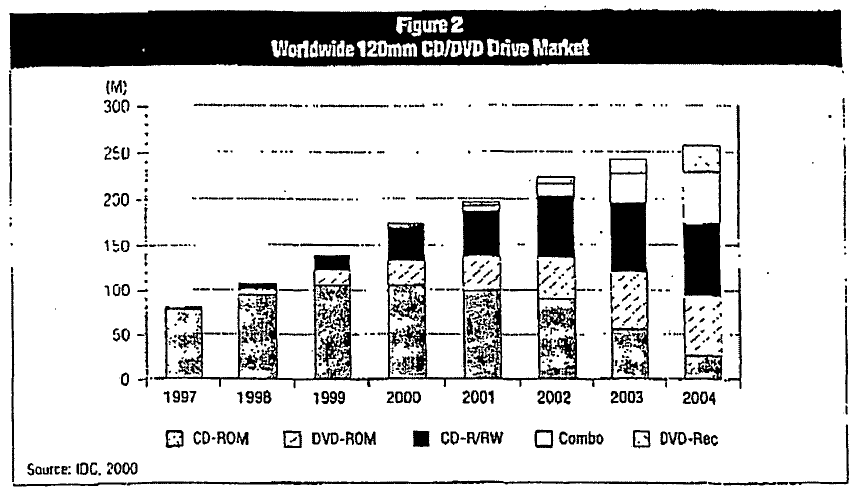

CD-RW will be the largest segment, replacing CD-ROM, followed by DVD-ROM. From 2003 onward the Combo Drive (CD-RW and DVD-ROM) will become important. Also, in the later years we will see one or more flavors of DVD-Rec (DVD-RAM, DVD-RW, DVD+RW) become important.

Much of CD's success is based on the following factors:
- Compatibility
- Affordability
- Content

As a standard-based technology, CD achieved excellent compatibility. Even as CD added recording and rewriting functionality to some drives, the impact on media interchange has been small. CD-R is readable in virtually any of the 500 million CD-ROM-compatible drives worldwide. CD-RW had some initial incompatibility issues. However, for more than two years, the clear majority of CD-ROM drives have been able to read CD-RW media. The beauty of CD-RW drives has been that if compatibility is required, they can record a CD-R and a CD-RW with the same ease.

CD-ROM drives have seen very steep price declines from over $100 OEM in 1995, their breakthrough year, to below $30 in 2000. Leveraging in the CD Audio Player experience allowed the industry to reduce cost and increase speed at the same time. CD-RW has now also fallen below the important $100 OEM price point and has become affordable in many high-end and mainstream PC configurations.

Content is a key driver for CD technology. Besides the plentiful CD audio title choices, virtually any computer software is available on CD-ROM. Again, CD-R/RW has added significant value because now average users are able to create customized content. Users can burn custom audio recording, photo albums, and experimental software on inexpensive CDs for easy interchange or archiving.

Additionally, CD-R is replacing the floppy diskette as the medium of choice for general interchange of data. The inexpensive floppy has served well in this application for over 20 years. However, as the typical file size has increased over the years, its 1.44MB capacity has become insufficient for almost everything besides plain text. CD-R is a good fit to replace the floppy because it combines compatibility and low media cost (<$1 for a CD-R) with much higher capacity (650MB).

Besides the trend for CD-RW to become the de facto floppy replacement, there is a more formal initiative underway with the same goal. It is called the "Mount Rainier Initiative," and it is supported by Sony, Philips, Microsoft, and Compaq. Its goal is to provide true "drag-and-drop" functionality for CD-RW drives on the PC. This shows that already, even without ML, the market is moving toward CD-R/RW as the "floppy of the future."

Nonetheless, even CD-R 650MB is not sufficient for all applications of removable storage. In particular, full system backup and video applications typically require more than 1GB of storage. Today, the hard drive of a typical PC has over 10GB of storage. As this capacity fills up, a system backup would span several CD-R/RWs.

High-quality, full-screen video is another key area where CD capacity is insufficient if users want to record more than a few minutes. As end users get more and more accustomed to DVD-quality video, the storage capacity of removable media will also need to increase in order to satisfy this fast-growing application.

There is also the emerging markets for mobile consumer devices, which require high capacity and fast recording. Audio, digital photography, and video will be the dominant applications. Many of these devices will require small form factor media.

CD is a good fit due to its capacity, compatibility with a large installed base of CD players and CD-ROM drives as well as inexpensive and rugged media. There is also an intangible factor, and that is that CD media are familiar to consumers. This could play to the advantage of CD-based optical storage systems as they require no new introduction to users. However, capacity beyond what standard small form factor CDs can provide will be important, especially for video recording.

CD recording has debuted in digital cameras in the form of the 80mm CD-R-enabled Mavica Camera from Sony. Clearly, the high capacity and low cost of the media, and the fact that by default three is automatically a permanent backup copy of the digital image on the CD, has end users excited. Additionally, the easy interchange of the CD between the camera and virtually any PC eliminates the need for cables or adapters.

Limiting factors for optical recorders are the cost of the drive and physical integration into the host device. Physical size of the drive and power consumption will continue to be challenges in mobile or battery-powered mobile devices.

Besides ML recording, which is discussed later in the paper, several other technologies, such as DVD-Rec and double-density CD (DDCD), go beyond CD capacity.

### DVD-Rec Drives

DVD-Rec drive shipments, which include DVD-R/RW, DVD-RAM, DVD+RW, and similar formats, have shipped in only very modest volume. Despite the fact that three vendors - Panasonic, Hitachi, and Toshiba - are now shipping DVD-RAM in production volumes, IDC believes that market acceptance will continue to be sluggish in 2000.

Several reasons account for the relatively low DVD-Rec (mostly DVD-RAM at this time) shipments, including compatibility, competing formats, price, capacity, and functionality. One of the main reasons for this slow acceptance is the small installed base of DVD-ROM drives and DVD-Video players can read DVD-RAM media. Another reason is market confusion due to the presence of several competing formats for DVD recording, including DVD-RAM and DVD-RW (endorsed by the DVD Forum) and DVD+RW (supported by six major CD-RW vendors, including initial DVD Forum members Philips and Sony). Additionally, DVD-Rec's high prices, compared with those of CD-RW, limit its sales to the aftermarket and even more to PC OEMs. Capacity has been more of a psychological issue for first-generation DVD-RAM with 2.6GB capacity per side because DVD-ROM holds up to 4.7GB on one side. Also, unlike CD recording, which allows easy copying of audio CD, DVD recorders lack the same killer application because DVD movies are copy protected. Additionally, current DVD-Rec drives are backward-read compatible but not write compatible (they cannot record CDs), and CD-RW has become an increasingly important feature on many PCs.

However, in the near future, new products will address most of these issues, and IDC believes that long-term DVD recording will become a common feature on most PCs.

One reason why DVD-Rec drives have been more expensive is that DVD uses a red laser, instead of the infrared laser used in CD technology, to achieve the necessary high density. Therefore, to be able to also be compatible with CD technology a second laser and additional optics are required. Bridging backward compatibility to CD and forward compatibility to all major DVD formats is one of the major challenges for DVD-Rec technology.

### Double-Density CD

In August Sony announced the purple book double-density CD-ROM/R/RW. This format is designed to achieve higher density without requiring red laser technology. This technology achieves 1.3GB capacity - twice that of CD - which is a significant improvement, but not enough for full system backup (typically at least 2GB) or at least one hour of DVD-quality video, a minimum threshold for users. DDCDs are written with a standard infrared CD laser in combination with a new, more powerful lens; therefore, DDCD drives require a new optical head as well as new electronics. Write speeds remain constant, so the DDCD drive takes twice as much time to record a DDCD as a standard CD. Once recorded, DDCDs cannot be read in standard CD-ROM drives. Nonetheless, DDCD could have a delaying effect on DVD-Rec if the technology delivers on its promise to only marginal cost increases over current CD technology. The spirit of DDCD is to extend current technology without requiring a major, often expensive, technology leap. With this incremental approach, DDCD is similar to ML technology.

### Background on ML Technology

Calimetrics and its partners in the recently announced ML Alliance utilize proprietary MultiLevel Recording^{™} techniques that can provide 3x or more increase in the storage capacity and native data transfer speed of today's standard CD and DVD optical drives and disc media. More importantly, this 3x improvement can be made without altering existing optics, mechanics, or manufacturing infrastructure. Further, a single ML chip, for writing and reading ML-encoded discs, integrates directly onto existing onboard electronics for standard optical drives so that backward compatibility with legacy CD and DVD discs can be retained. Also, the technology is forward compatible and can provide further improvements as blue lasers, new lenses, and dual-sided recording technologies are introduced.

### ML Technology for Writable Optical Systems

As shown in the top part of Figure 3, in a conventional writable optical disc drive, the laser writes and reads a series of marks of uniform darkness or reflectivity on the disk. These marks are of different lengths and are used to encode data.

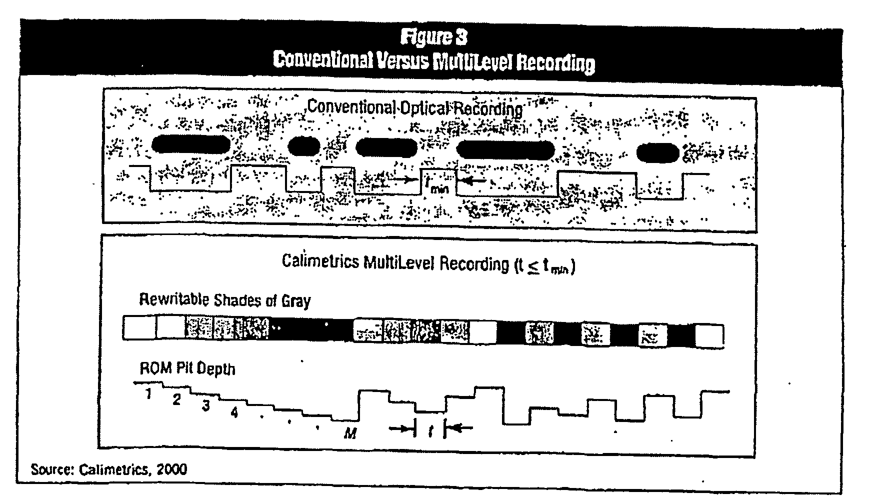

With MultiLevel Recording,^{™} Calimetrics creates marks of different lightness or darkness - different levels of reflectivity (see bottom part of Figure 3). Each mark is roughly the same length. But now with MultiLevel Recording, ^{™} more information can be written and stored in each data cell on the disc. For example, in the space where a 0 or 1 was previously stored, MultiLevel Recording^{™} can store values from 1 to 8 (or more). As a result, the same space on the disc now stores more information, increasing the capacity for the same surface area of the disc. In a read-only system, those multilevel marks are actually pits of physically different depths, which create the effect of multiple levels of reflectivity to the reading laser. Calimetrics calls this technique Pit-Depth Modulation for ROM discs.

For writable and read-only discs, MultiLevel Recording^{™} also increases the data transfer rate of the system. When writing and reading, the laser in a conventional optical drive is essentially used as an "on-off" switch, either writing or reading a mark or the absence of a mark. In MultiLevel recording, the laser can now write and read more information in the same space on the disc. For example, in an eight -level system, three bits, or three times as much information, can be recorded in a single mark in the same (or less) time as it takes to record one bit in standard recording. When combined with high-bandwidth electronics, MultiLevel Recording^{™} provides significantly increased data transfer rates for writing and reading.

Unlike many alternative approaches, optical drives based on MultiLevel Recording^{™} technology will not require new materials or advances in laser technology. Current CD and DVD drives only require one new integrated circuit, plus disc media fine-tuned for MultiLevel Recording,^{™} in order to achieve significant increases in capacity and speed.

### Integral Near-Field Optics Multiplies ML Capacity Improvements

Beyond the 3X improvements due to MultiLevel recording, Calimetrics' Integral Near-Field Optics technology provides an additional 2.5x to 3x multiplier to the data capacity of reflective optical storage systems such as CD and DVD. Unlike other types of near-field recording, this technology is implemented without flying the optical head very close to the disc media, thereby solving a major technical problem that has delayed commercialization of near-field technology in removable optical data storage systems. In combination with Calimetrics' proprietary MultiLevel Recording^{™} technology, the Calimetrics' near-field technology provides approximately eightfold increases in the data recording capacity of CD-R and CD-RW systems, to 5GB per disc, and approximately fivefold increases to recordable and rewritable DVD formats, to 25GB per disk (see Figure 4). These gains are achieved without changing the lasers, optics, and mechanicals components of the base systems.

To understand how Integral Near-Field Optics works, some background is needed: Optical data storage capacity is determined by the size and spacing of the marks that can be written by a laser diode that is focused by a lens onto the media, and then read back by the same lens. The size and spacing of the marks are determined by the wavelength of the light used, as well as the diameter and focal length of the lens (Numerical Aperture or N.A.). Accordingly, a shorter wavelength laser diode and higher N.A. lens provide higher storage capacity, as seen in DVD and CD products.

With near-field optics, significantly higher numerical apertures can be achieved, thereby increasing the storage capacity. One implementation is done by using a hemispherical lens, made from a material with a high refractive index, that is "flown" very close to first surface media (meaning the recording layer and data are on the top of the media), as part of a flying head. The laser light from a conventional (far-field) optical module focuses just below the lens, a fraction of a wavelength of light away - hence the term "near-field." The focused spot is made smaller by the high refractive index, which shortens the effective wavelength of the laser light, and numerical aperture of the lens. However, the near-field effect requires that the distance between the first surface media and the flying lens be approximately 100nm. Efforts to develop near-field storage, especially for removable media, have been slowed by the difficulty of maintaining such a small distance between the flying lens and the media surface (known as the head-media interface), especially for removable media.

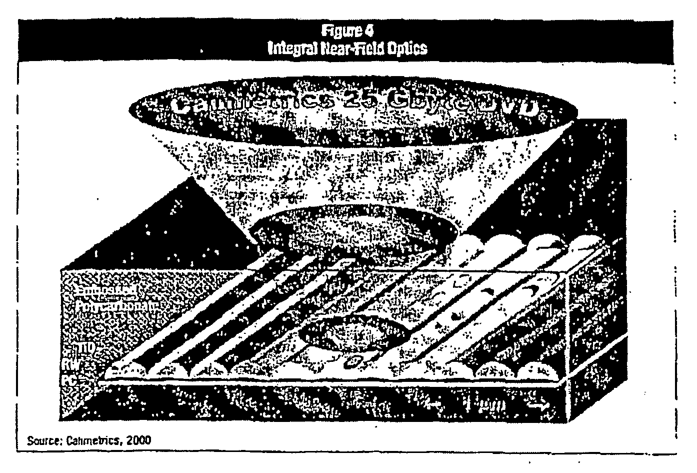

However, Integral Near-Field Optics works differently. Calimetrics' near-field technology is achieved by embedding proprietary structures within the media itself that work with the normal far-field lens-to-media surface placement of CD and DVD drives to achieve the smaller and more closely spaced markets, thereby increasing capacity. The recording layer and data are embedded and protected deep in the media and, just as with DVD and CD, the media is removable Integral Near-Field Optics is illustrated in Figure 5.

The Integral Near-Field technology is currently under development by Calimetrics. Like Calimetrics' Multilevel Recording^{™} technology, the near-field technology can be added to existing CD and DVD systems at very low incremental cost, primarily through use of us to two ASICs as well as refined/reformulated disc media manufactured using existing processes. The technologies will be combined to yield 5GB CD-type products and 25GB and greater DVD-type products.

### Market Impact of ML Technology

ML Technology is positioned to play a major role in:
- Traditional PC-attached optical opportunity
- High-performance segment
- Emerging consumer opportunity

Higher capacity and performance is desirable for everyone. However, PC OEMs are very price sensitive and have to shop for the best available technology for each product line while still hitting the targeted price points.

In the PC world, starting with distribution in aftermarket channels, a high-end segment typically evolves into the next mainstream technology as prices decline and volume increase; then PC OEMs begin to adopt. Once that happens, normally a new, higher-performance segment emerges. Figure 5 shows how 8x CD-RW has transitioned from a high-end product in 1Q00 into the next mainstream CD-RW drive, replacing 4x drives. Also, 10x and 12x CD-RW drives have expanded their presence at the top of the performance spectrum and are poised to move into replace 8x drives within the next two quarters.

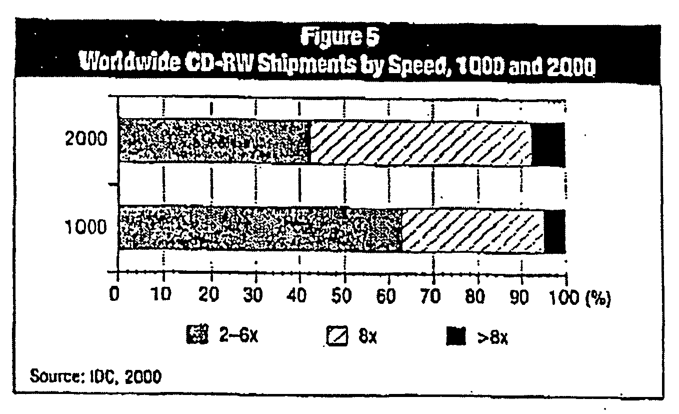

For PC applications, Multilevel Recording^{™} has the potential to offer PC OEMs and their customers significantly higher capacity and performance benchmarks for any given standard CD-R/RW drive's cost and base spindle speed.

In addition, MultiLevel Recording^{™} can help PC OEMs and their customers reduce cost and increase system functionality. One CD-R/RW drive with MultiLevel Recording^{™} provides all removable data storage functions in a single, low-cost device:
- Data distribution, delivered with a CD-ROM drive
- Data interchange, provided by the floppy disk and CD-R drives
- Near-online storage capability, provided by high-capacity floppy, tape and removable hard disk drives

Another market opportunity is the emerging consumer device that uses CD-R technology. Examples are Philips' Double Deck consumer CD recorder and Sony's Mavica CD-R digital cameras. In particular, for the mobile consumer applications, small, ideally palm-size devices are critical. For example, a number of companies, including IDS Ltd., are working on developing handheld MP3 audio recorders that utilize small form factor, low-cost CD recording technology instead of expensive flash RAM. Therefore, small form factor removable storage becomes essential. It is therefore no surprise that Sony's digital camera uses the smaller 80mm CD format. However, smaller form factors require greater data density, because end users will demand sufficient capacity for their applications.

For all the preceding market opportunities, performance is as important as capacity. Capacity by itself has limited benefits for the end user if it takes too long to record it. One lesson that can be learned from the floppy replacement battle is that even though the choices have vastly more capacity (100-650MB compared with floppy's 1.44MB), the user still expects that new technologies should not take longer to record a disk. Performance and capacity increases must go hand-in-hand. Users expect higher capacity from their removable drives over time but expect that they can record one disc at least as fast as the old technology.

### ML in the Context of Current Market Trends

ML technology addresses the following critical factors needed for success in the CD/DVD drive market:
- Capacity
- Speed
- Low incremental cost
- Backward compatibility
- Forward compatibility with new formats

ML technology arrives at higher capacity by packing more bits into the same physical space on an optical disc without requiring shorter wavelength lasers or additional optics. The data rate is increased by the same factor as the capacity because ML electronics can read and write more data in the same physical space without spinning the media faster.

Calimetrics' goal is to minimize the incremental cost of ML-enabled CD and DVD drives. This will be critical. As discussed in the previous two sections, users will perceive ML technology as one more new feature. A useful example is the addition of CD-RW capability to CD-R drives a few years ago. Initially, when launched in 1Q97, CD-RW drives cost 25% more than standard CD-R drives of a similar speed - a significant price premium. By 1Q98, the CD-RW price premium over CD-R declined to less than 5%. However, ML technology also offers significantly higher write speeds than standard CD-R/RW drives, and the market has shown a desire to pay a significant price premium for write speed increases much smaller than the 3x improvements ML technology promises to deliver. For example, 12x drives at introduction commanded $50-100/drive price premium over 8x drives at retail, and $20-50/drive price premium in the OEM channel, during the first year after their launch. MultiLevel Recording^{™} technology promises to triple the performance of drives with 12x spindle speeds at 36x, while the remainder of the industry will be offering drives that record only at 12x to 16x maximum rates.

Backward compatibility with today's CD technology is clearly one key requirement for any new mass-market optical technology. ML technology delivers on this important requirement. In fact, it is designed to achieve CD-R/RW compatibility without requiring additional optics or mechanical components.

For many casual users, the value of higher capacity and performance from ML technology is at least initially much smaller than the value of CD-R/RW recording. Even though ML CD-RW drives offer significant additional functionality, its true value will become apparent to users as the installed base of CD-ROM drives builds that can read ML CD-R/RW media. CD-ROM drives manufacturers can achieve read compatibility with ML discs with the addition of some electronic circuitry, no changes to drive optics or mechanics are required. In the meantime, ML offers the user a high-capacity storage functionality for personal storage.

### Marketing Challenge

ML technology offers significant additional functionality over regular CD or DVD drives without compromising the drive's CD or DVD recording performance. However, the increased choice of media also increases the complexity of the product. ML-enabled CD-RW drives can record CD-R, CD-RW, and ML CD media, all with different levels of compatibility. Therefore, Calimetrics and its partners must educate the end user about compatibility and incompatibilities of CD-R, CD-RW, and ML CD discs. However, Calimetrics has, with TDK and Mitsubishi Chemical, media partners that pioneered the introductions of CD-R and CD-RW media. So, while this is a challenge, the alliance has the experience to adequately address the challenge.

Also, typically each media type will have different write and read speeds. This means that the drive could easily have four or more performance parameters, all of which must be explained to the user.

End users will need to be able to easily identify ML media. Otherwise, they might try to record it in a regular recorder, which could lead to user frustration and many tech support calls. This could be done with a logo or by color coding ML media.

### Conclusion

MultiLevel Recording^{™} technology is a promising new development in optical data storage and has the potential to solve the cost and backward-compatibility issues that have prevented greater-than-CD capacity optical recording from becoming widely adopted.

The capacity and performance of ML technology opens up new applications for optical data storage products including a high-performance data storage peripheral for the PC, a high-capacity, high-performance, and low-cost medium for digital video editing, and in small form factor (50-80mm), an exciting new way for CD technology to be used in handheld, portable, and Internet appliance applications.

The support of ML technology by Calmetrics, TDK, Mitsubishi Chemical, and Plextor lends credibility to the timely commercialization of the ML product family.

ML technology could extend the life of CD technology by several years if ML enabled CD-RW drives cost only marginally more than regular CD-RW drives and significantly less than DVD recorders that can also record CD-R/RW media.

ML technology is also positioned as a bridge product between CD and DVD technologies. It fills the capacity range in-between CD and DVD by staying close to CD technology and cost. Therefore, ML technology enables applications which normally would require DVD technology with much few limitations than CD technology. Video is probably the one key application. With 2GB, ML technology is able to handle about one hour of DVD-quality video for recording and editing. Once users are accustomed to these new applications and the price for DVD recorders has declined further, it will be an easy transition to DVD.

Calimetrics' near-field recording technology could add again to the useful life span of CD technology by pushing the capacity to 5GB. This would fully close the gap to DVD and allow users to choose between two types of high capacity media: DVD media, which will have forward compatibility with an increasing installed base, and near-field ML media, which will have easier compatibility with the CD installed base.

The same value proposition can be repeated with DVD to push the technology easily to 25-50GB. This capacity range enables over two hours of HDTV-quality video. Again, ML technology enables a technology to extend far beyond its original goal.

The initial focus on CD-RW is the most promising initial implementation of ML technology. CD technology has reached universal user acceptance and will continue to grow strongly. By the end of 2001, IDC expects the worldwide installed base of CD-R/RW drives to exceed 100 million. CD recording will have become such a common feature in PCs that users will expect this capability from newer drives. Therefore, DVD-RAM and other higher-capacity drives that choose not to be able to record a CD will have a clear disadvantage over backward-write-compatible drives.

| NORTH AMERICA | ASIA/PACIFIC |
|---|---|
| Corporate Headquarters | IDC Asia/Pacific (Hong Kong) |
| 5 Speen Street | 12/Floor, St. John's Building |
| Framingham, MA 01701 | 33 Garden Road |
| 508-872-8200 | Central, Hong Kong |
| | 852-2530-3831 |
| IDC Canada | |
| 36 Toronto Street, Suite 950 | IDC Asia/Pacific (Singapore) |
| Toronto, Ontario, Canada M5C2C5 | 71 Bencoolen Street, #02-01 |
| 416-369-0033 | Singapore 189643 |
| | 65-226-0330 |
| IDC Irvine | |
| 18831 Von Karmen Ave., Suite 200 | IDC Australia |
| Irvine, CA 92612\ | Level 4, 76 Berry Street |
| 949-250-1960 | North Sydney, NSW 2060 |
| | Australia |
| IDC Mtn. View | 61-2-9922-5300 |
| 2131 Landings Drive | |
| Mountain View, CA 94043 | IDC China |
| 650-691-0500 | Room 611, Beijing Times Square |
| | 88 West Chang'an Avenue, Beijing |
| IDC New Jersey | P.R. China, 100031 |
| 120 Wood Ave. South, Suite 509 | 86-10-8391-3456 |
| Lyclin, NJ 08830 | |
| 732-632-9222 | IDC (India) Limited |
| | Cyber House |
| IDC New York | B-35, Sector 32-Institutional |
| 2 Park Avenue | Gurgson - 122002, Haryana, India |
| Suite 1505 | 91-124-6381673 to 80 |
| New York, NY 10016 | |
| 212-726-0900 | IDC Japan |
| | 10F The Isoyama Tower |
| IDC Texas | 3-7-18, Mita Minato-ku |
| 10 Congress Ave., Suite 2000 | Tokyo 108-0073, Japan |
| Austin, TX 78701 | 81-3-3440-3400 |
| 512-4.69-6333 | |
| | IDC Korea Ltd. |
| IDC Washington | Suite 704, Korea Trade Centre |
| 8304 Professional Hill Drive | 159-1, Samsung-Dong, |
| Fairfax, VA 22031 | Kangnam-Ku |
| 703-280-5161 | Seoul, Korea 135-729 |
| | 82-2-55-14380 |
| IDC Malaysia | EUROPE, MIDDLE EAST, AND |
| Suite 13-03, Level 13, Wuma | AFRICA |
| KuPeng | |
| No. 3, Jalan Kia Peng | IDC Austria |
| 50450 Kuala Lumpur, Malaysia | c/o Loisel, Spiel, Zach Consulting |
| 6-03-2163 3715 | Mayerhofguse 6 |
| | A-1040 Vienna, Austria |
| IDC New Zealand | 43-1-50-50-900 |
| Level 7, 246 Queen Street | |
| Auckland, New Zealand | IDC Benelux (Belgium) |
| 64-9-309-8252 | 29 Avenue Louis Gribaumont |
| | B-1150 Brussels, Belgium |
| IDC Philippines | 32-2-779-46-04 |
| 7F, SEDCCO 1 Bldg. | |
| Rada Street Corner | IDC Benelux (The Netherlands) |
| Legaspi Street | A. Fokkerweg 1 |
| Legaspi Village | 1059 CM Amsterdam |
| Makati City, Philippines | The Netherlands |
| 632-894-4808 | 31-20-669-2721 |
| IDC Taiwan Ltd. | IDC Central Europe (ECE) . |
| 10F.31 | Malc Namcati 13 |
| Jen-Ai Rd., Sec. 4, | Praha 1 110 00, Czech Republic |
| Taipei 106, Taiwan, R.O.C. | 420-2-2142-3140 |
| 886-2-2731-7288 | |
| | IDC Central Europe (Germany) |
| IDC Thailand | Nibelungerplacz 3, 11^{th} Floor |
| 27 Soi Charoen Nakom 14 | 60318 Frankfurt, Germany |
| Charoen Nakom Road, Klongronsai | 49-69-90502-0 |
| Klongsan Bangkok 10600, Thailand | |
| 66-2-439-4591-2 | IDC Central Europe (Switzerland) |
| | Niederlassung Zürich |
| IDC Vietnam | WTC, Leuchenbachstrasse 95 |
| 37 Ton Duc Thang Street | CH - 8050 Zürich |
| Unit 1606 | Switzerland |
| District-1 Hochiminh City Vietnam | 41-1-307-1000 |
| 84-8-910-1235 | |
| | IDC Egypt |
| | 39 Iraq Street |
| | Mohandersoen, Cairo, Egypt |
| | 20-2-336-7355 |
| IDC France | IDC Poland/ProMarket |
| Immeuble La Fayette | Wrobla 43 |
| 2, Place des Voages, Cedex 65 | 02-736 Warsaw, Poland |
| 92051 Paris la Defense 5, France | 48-22-644-4105 |
| 33-14-904-8000 | |
| | IDC Portugal |
| IDC Hungary | Av. Antonio Serpa, 36 Piso 9 |
| Bajcay-Zailinszky St. 57 | 1050-027 Lisbon |
| Building 3, Rooms 103-104 | Portugal |
| H-1065 Budapest, Hungary | 351-21-796-5487 |
| 36-1-153-0555/ext. 165, 166 | |
| | IDC Russia |
| IDC Israel | c/o PX Post, RDS 186 |
| 4 Gershon Street | Ulitm Zorge 10 |
| Tel Aviv 67017, Israel | Moscow 125525 |
| | Russian Federation |
| IDC Italy | 7-501-929-9959 |
| Viak Monza, 14 | |
| 20127 Milano, Italy | IDC South Africa |
| 390-2-284-571 | c/o BMI-Tech Knowledge |
| | 3^{rd} Floor, 356 Rivonia Blvd. |
| IDC Nigeria | P.O. Box 4603, Rivonia 2128 |
| House 2, "C" Close | South Africa |
| 403 Road, 4^{th} Avenue | 27-11-803-6412 |
| New Extension, Fescac Town | |
| Lagos, Nigeria | IDC Spain |
| 234-1-883585 | Ochandiano, 6 |
| | Centro Empressarial EI Plantio |
| IDC Nordic (Denmark) | 28023 Madrid |
| Jagwej 169B | 34-91-7080007 |
| DK-2100 Copenhagen, Denmark | |
| 45-39-162222 | IDC Turkey |
| | Tevfik Erdonmez Sol. 2/1 Gul Apt. |
| IDC Nordic (Finland) | Kat 9D; 46 Esensepe |
| Jarrumiehenkatu 2 | Istanbul, Turkey |
| FIN-00520 | 90-212-275-0995 |
| Helsinki, Finland | |
| 358-9-8770-466 | IDC U.K. |
| | British Standards House |
| IDC Nordic (Sweden) | 389 Chiswick High Road |
| Box 1096 Kisaghngen 21 | London W4 4AE |
| S-164 25 Kista, Sweden | United Kingdom |
| 46-8-751-0415 | 44-20-8987-7100 |
| LATIN AMERICA | IDC Venezuela |
| | Calle Guaucapuro |
| IDC Miami | Edif. Torre Seguros Aliarita |
| Latin America Headquarters | Piso 6, Ofc. 6-D, EI Rotal |
| 5301 Blue Lagoon Drive | Caracas 1060, Venezuela |
| Suite 490 | 58-2-951-3270 |
| Miami, FL 33126 | |
| 305-267-2616 | IDC |
| | 5 Speen Street |
| IDC Argentina | Framingham, MA 01701 |
| Trends Consulting | (508) 572-8200 |
| Rivadavia 413, 4^{th} Floor, Suite 6 | Fax: (508) 935-4015 |
| C1002AAC, Buenos Aires, | |
| Argentina | IDC delivers accurate, relevant, |
| 54-11-4343-8899 | and high-impact data and insight |
| | on information technology to help |
| IDC Brasil | organizations make sound |
| Alameda Ribeirio Preso, 130 q 41 | business and technology decisions. |
| 01331-000 São Paulo | IDC forecasts worldwide IT |
| SP Brazil | markers and adoption and |
| 55-11-253-7869 | technology trends, and analyses IT |
| | products and vendors, using a |
| International Data Corp, Chile | combination of rigourous primary |
| Luis Thayer Ojeda 166 Piso 12 | research and in-depth competitive |
| Providencia, Santiago 9, Chile | analysis. IDC is committed to |
| 56-2-231-0111 | providing global research with local |
| | consent through more than 500 |
| IDC Colombia | analyses and more than 40 |
| Carrera 40 #103-78 | countries worldwide. IDC's |
| Bogota, Colombia | customers comprise the world's |
| 571-533-2326 | leading IT suppliers, T |
| | organizations, and the financial |
| IDC Mexico | community. Additional information |
| Select - IDC | on IDC can be found on its Web |
| Av. Nuevo Leon No. 54 Desp. 501 | site at http://www.IDC.com. |
| Col. Hipodromo, Condesa | IDC is a division of IDG, the world's |
| C.P. 06100 Mexico, D.F. | leading IT media, research, and |
| 52-5-256-1426 | exposition company. |

## Claims

1. A method of distributing digital video programs to a plurality of customers,
**characterized by**:
producing, under authority of content provider, disks including multiple video programs recorded on the disks,
providing the customers with the disks,
wherein, if the customer has viewed video programs recorded on the disks, the following data transaction is carried out between a disk reader device used by the customer to view the video programs and a central computer:
a) receiving, from the disk reader device, at the central computer, a unique identification number identifying the disk reader device of the user; and
b) receiving, form the disk recorder device, at the central computer, a first unique transaction number generated by the disk reader device during the previous data transaction,
c) generating at the central computer a digital rights management code based on the unique identification number and the first unique transaction number and sending this to the disk reader device,
d) receiving, from the disk reader device, at the central computer, a notification from a disk reader device that a customer has viewed at least one video program from the disks,
e) receiving, from the disk reader device, at the central computer, a second unique transaction number which has been generated by the disk reader device,
f) generating, at the central computer, a digital rights management code, based on the unique identification number and the second unique transaction number and sending this to the disk reader device.
wherein the customer is charged a viewing fee only for video programs viewed by the customer in accordance with said received notification.

2. The method according to Claim 1, wherein producing includes recording on the disks multiple new release movies.

3. The method according to Claim 1, wherein providing the customers with the disks includes distributing the movie disks to the customers on a periodic basis.

4. A method according to Claim 3, wherein providing the disks to the customer includes distributing the movie disks to the customers on a monthly basis.

5. A method according to Claim 1, wherein producing includes recording on the disks classic/older movies.

6. A method according to Claim 5, wherein providing the customers with the disks includes permitting the customers to order selected ones of the older movie disks.

7. A method according to Claim 1, wherein the defined recording procedure is a proprietary procedure.

8. A method according to Claim 1, wherein producing the disks includes encrypting the digital video program data on the disks.

9. A method according to Claim 1, wherein, when the central computer sends said code to said reader device, the central computer also sends to said reader device instructions for the amount of available credit that the reader device can draw upon.

10. A method according to Claim 1, further comprising the central computer receiving data identifying video programs that have been played on the reader device, when the reader device transmits the first identification number to the central computer.

11. A method according to Claim 10, wherein receiving at the central computer information identifying one or more dates and times for each video program played on the reader device, when the reader device transmits its first identification number to the central computer.

12. A method according to Claim 1, further comprising providing the reader device with a first table listing standard pricing rules for a first category of video programs.

13. The method according to Claim 12, further comprising providing each reader device with a second table listing exception pricing rules for a second category of video programs.

14. A system of distributing digital video programs to a plurality of customers,
**characterized by**:
means for producing, under authority of content provider, disks including multiple video programs recorded on the disks,
means for providing the customers with the disks,
means for carrying out, if the customer has viewed video programs recorded on the disks, the following data transaction between a disk reader device used by the customer to view the video programs and a central computer:
a) receiving from the disk reader device, at the central computer, a unique identification number identifying the disk reader device of the user; and
b) receiving, from the disk reader device, at the central computer, a first unique transaction number generated by the disk reader device during the previous data transaction,
c) generating, at the central computer, a digital right management code based on the unique identification number and the first unique transaction number, and sending the digital rights management code to the disk reader device,
d) receiving from the disk reader device, at the central computer, a notification from a disk reader device that a customer has viewed at least one video program from the disks,
e) receiving, from the disk reader device, at the central computer, a second unique transaction number generated by the disk reader device,
f) generating, at the central computer, a digital rights management code, based on the unique identification number and the second unique transaction number, and sending this to the disk reader device. and means for charging the customer a viewing fee only for video programs viewed by the customer in accordance with said received notification.

15. A system according to Claim 14, wherein the means producing includes means for recording on the disks multiple new release movies.

16. A system according to Claim 14, wherein the means for providing the customers with the disks includes means for distributing the movie disks to the customers on a periodic basis.

17. A system according to Claim 16, wherein the means for providing the disks to the customer includes means for distributing the movie disks to the customers on a monthly basis.

18. A system according to Claim 14, wherein the means for producing includes means for recording on the disks classic/older movies.

19. A system according to Claim 18, wherein the means for providing the customers with the disks includes means for permitting the customers to order selected ones of the older movie_disks.

20. A system according to Claim 14, wherein the multiple video programs are recorded on the disk using a proprietary recording procedure.

21. A system according to Claim 14, wherein the means for producing the disks includes means for encrypting the digital video program data on the disks.

22. A system according to Claim 14, wherein, when the central computer sends said code to said reader device, the central computer also sends to said reader device instructions for the amount of available credit that the reader device can draw upon.

23. A system according to Claim 14, further comprising means for the central computer receiving data identifying video programs that have been played on the reader device, when the reader device transmits the first identification number to the central computer.

24. A system according to Claim 23, wherein the means for receiving at the central computer information identifying one or more dates and times for each video program played on the reader device, when the reader device transmits its first identification number to the central computer.

25. A system according to Claim 14, further comprising means for providing the reader device with a first table listing standard pricing rules for a first category of video programs.

26. A system according to Claim 25, further comprising means for providing each reader device with a second table listing exception pricing rules for a second category of video programs.

## Patentansprüche

1. Verfahren zum Verteilen von digitalen Videoprogrammen an eine Mehrzahl von Kunden, **gekennzeichnet durch** Herstellen von Scheiben mit Berechtigung des Inhaltslieferanten einschließlich mehrerer auf der Scheibe aufgenommener Videoprogramme, Versorgen der Kunden mit den Scheiben,
wobei, wenn der Kunde die auf die Scheiben aufgenommenen Videoprogramme gesehen hat, die folgende Datentransaktion zwischen einem Scheibenlesegerät, das vom Kunden zum Sehen des Videoprogramms genutzt wird, und einem Zentralcomputer, durchgeführt wird:
a) Empfangen einer eindeutigen Identifikationsnummer am Zentralcomputer vom Scheibenlesegerät, die das Scheibenlesegerät des Kunden identifiziert, und
b) Empfangen einer ersten eindeutigen Transaktionsnummer am Zentralcomputer vom Scheibenlesegerät, die vom Scheibenlesegerät während der vorhergehenden Datentransaktion generiert wurde,
c) Generieren eines Digital-Rights-Management Kodes am Zentralcomputer basierend auf der eindeutigen Identifikationsnummer und der ersten eindeutigen Transaktionsnummer und senden dieses an das Scheibenlesegerät,
d) Empfangen einer Notifikation von einem Scheibenlesegerät am Zentralcomputer vom Scheibenlesegerät, dass ein Kunde mindestens ein Videoprogramm von den Scheiben gesehen hat,
e) Empfangen einer zweiten eindeutigen Transaktionsnummer am Zentralcomputer vom Scheibenlesegerät, welche vom Scheibenlesegerät generiert wurde,
f) Generieren eines Digital-Rights-Management Kodes am Zentralcomputer, basierend auf der eindeutigen Identifikationssnummer und der zweiten eindeutigen Transaktionsnummer und senden dieses an das Scheibenlesegerät,
wobei dem Kunden eine Sehgebühr nur für Videoprogramme berechnet wird, die der Kunde in Übereinstimmung mit der empfangenen Notifikation gesehen hat.

2. Verfahren gemäß Anspruch 1, wobei das Herstellen das Aufnehmen von mehreren Neuerscheinungsfilmen auf die Scheiben aufweist.

3. Verfahren gemäß Anspruch 1, wobei das Versorgen der Kunden mit den Scheiben das Verteilen der Filmscheiben zu den Kunden auf einer periodischen Basis aufweist.

4. Verfahren gemäß Anspruch 3, wobei das Versorgen der Kunden mit den Scheiben das Verteilen der Filmscheiben an die Kunden auf monatlicher Basis aufweist.

5. Verfahren gemäß Anspruch 1, wobei das Herstellen das Aufnehmen von klassischen/älteren Filmen auf Scheiben aufweist.

6. Verfahren gemäß Anspruch 5, wobei das Versorgen der Kunden mit den Scheiben die Erlaubnis für den Kunden aufweist, ausgewählte ältere Filmscheiben zu bestellen.

7. Verfahren gemäß Anspruch 1, wobei die definierte Aufnahmeprozedur eine proprietäre Prozedur ist.

8. Verfahren gemäß Anspruch 1, wobei das Produzieren der Scheiben das Verschlüsseln der digitalen Videoprogrammdaten auf den Scheiben aufweist.

9. Verfahren gemäß Anspruch 1, wobei, wenn der Zentralcomputer den Kode zum Lesegerät sendet, der Zentralcomputer auch Instruktionen über die Höhe des gültigen Kredits, den das Lesegerät abrechnen kann, zum Lesegerät sendet.

10. Verfahren gemäß Anspruch 1, weiterhin aufweisend, dass der Zentralcomputer Daten, die die Videoprogramme identifizieren, die auf dem Lesegerät abgespielt wurden, empfängt, wenn das Lesegerät die erste Identifikationsnummer zum Zentralcomputer sendet.

11. Verfahren gemäß Anspruch 10, wobei der Zentralcomputer Informationen empfängt, die ein Datum oder mehrere Daten und Zeiten für jedes auf dem Lesegerät gespielte Videoprogramm identifiziert, wenn das Lesegerät seine erste Identifikationsnummer zum Zentralcomputer sendet.

12. Verfahren gemäß Anspruch 1, weiterhin aufweisend das Versorgen des Lesegeräts mit einer ersten Tabelle, die Standardpreisregeln für eine erste Kategorie von Videoprogrammen auflistet.

13. Verfahren gemäß Anspruch 12, weiterhin aufweisend das Versorgen jedes Lesegeräts mit einer zweiten Tabelle, die Ausnahmepreisregeln für eine zweite Kategorie von Videoprogrammen auflistet.

14. System zum Verteilen von digitalen Videoprogrammen an eine Mehrzahl von Kunden, **gekennzeichnet durch** Mittel zum Produzieren von Scheiben mit Berechtigung des Inhaltslieferanten einschließlich mehrerer auf der Scheibe aufgenommener Videoprogramme,
Mittel zum Versorgen der Kunden mit den Scheiben,
Mittel zum Durchführen der folgenden Datentransaktion zwischen einem Scheibenlesegerät, das vom Kunden zum Sehen des Videoprogramms genutzt wird, und einem Zentralcomputer, wenn der Kunde die auf die Scheiben aufgenommenen Videoprogramme gesehen hat:
a) Empfangen einer eindeutigen Identifikationsnummer am Zentralcomputer vom Scheibenlesegerät, die das Scheibenlesegerät des Kunden identifiziert, und
b) Empfangen einer ersten eindeutigen Transaktionsnummer am Zentralcomputer vom Scheibenlesegerät, die vom Scheibenlesegerät während der vorhergehenden Datentransaktion generiert wurde,
c) Generieren eines Digital-Rights-Management Kodes am Zentralcomputer basierend auf der eindeutigen Identifikationsnummer und der ersten eindeutigen Transaktionsnummer und senden des Digital-Rights-Management Kodes an das Scheibenlesegerät,
d) Empfangen einer Notifikation am Zentralcomputer vom Scheibenlesegerät, dass ein Kunde mindestens ein Videoprogramm von den Scheiben gesehen hat,
e) Empfangen einer zweiten eindeutigen Transaktionsnummer am Zentralcomputer vom Scheibenlesegerät, welche vom Scheibenlesegerät generiert wurde,
f) Generieren eines Digital-Rights-Management Kodes am Zentralcomputer, basierend auf der eindeutigen Identifikationssnummer und der zweiten eindeutigen Transaktionsnummer und senden dieses an das Scheibenlesegerät,
und Mittel zum Berechnen einer Sehgebühr vom Kunden nur für Videoprogramme, die der Kunde in Übereinstimmung mit der empfangenen Notifikation gesehen hat.

15. System gemäß Anspruch 14, wobei die Mittel zum Herstellen Mittel zum Aufnehmen von mehreren Neuerscheinungsfilmen auf die Scheiben aufweisen.

16. System gemäß Anspruch 14, wobei die Mittel zum Versorgen der Kunden mit den Scheiben Mittel zum Verteilen der Filmscheiben an die Kunden auf einer periodischen Basis aufweisen.

17. System gemäß Anspruch 16, wobei die Mittel zum Versorgen der Kunden mit den Scheiben Mittel zum Verteilen der Filmscheiben an die Kunden auf monatlicher Basis aufweisen.

18. System gemäß Anspruch 14, wobei Mittel zum Herstellen Mittel zum Aufnehmen von klassischen/älteren Filmen aufweist.

19. System gemäß Anspruch 18, wobei die Mittel zum Versorgen der Kunden mit den Scheiben Mittel aufweist, die dem Kunden erlauben, ausgewählte ältere Filmscheiben zu bestellen.

20. System gemäß Anspruch 14, wobei die mehreren Videoprogramme mit einer proprietären Aufnahmeprozedur auf die Scheibe aufgenommen werden.

21. System gemäß Anspruch 14, wobei die Mittel zum Herstellen der Scheiben Mittel zum Verschlüsseln der digitalen Videoprogrammdaten auf der Scheibe aufweisen.

22. System gemäß Anspruch 14, wobei, wenn der Zentralcomputer den Kode zum Lesegerät sendet, der Zentralcomputer auch Instruktionen über die Höhe des gültigen Kredits, den das Lesegerät abrechnen kann, zum Lesegerät sendet.

23. System gemäß Anspruch 14, weiterhin Mittel aufweisend, dass der Zentralcomputer Daten, die die Videoprogramme identifizieren, die auf dem Lesegerät abgespielt wurden, empfängt, wenn das Lesegerät die erste Identifikationsnummer zum Zentralcomputer sendet.

24. System gemäß Anspruch 23, wobei die Mittel zum Empfangen am Zentralcomputer Informationen sind , die ein Datum oder mehrere Daten und Zeiten für jedes auf dem Lesegerät gespielte Videoprogramm identifiziert, wenn das Lesegerät seine erste Identifikationsnummer zum Zentralcomputer sendet.

25. System gemäß Anspruch 14, weiterhin aufweisend Mittel zum Versorgen des Lesegeräts mit einer ersten Tabelle, die Standardpreisregeln für eine erste Kategorie von Videoprogrammen auflistet.

26. System gemäß Anspruch 25, weiterhin Mittel aufweisend zum Versorgen jedes Lesegeräts mit einer zweiten Tabelle, die Ausnahmepreisregeln für eine zweite Kategorie von Videoprogrammen auflistet.

## Revendications

1. Procédé de distribution de programmes vidéo numériques à une pluralité de clients, **caractérisé par** :
la production, sous l'autorité du fournisseur de contenu, de disques comprenant de multiples programmes vidéo enregistrés sur les disques,
la fourniture des disques aux clients,
dans lequel, si le client a visionné des programmes vidéo enregistrés sur les disques, la transaction de données suivantes est effectuée entre un dispositif lecteur de disques utilisé par le client pour visionner les programmes vidéo et un ordinateur central :
a) la réception, en provenance d'un dispositif lecteur de disques, au niveau de l'ordinateur central, d'un numéro d'identification unique identifiant le dispositif lecteur de disques de l'utilisateur ; et
b) la réception, en provenance du dispositif lecteur de disques, au niveau de l'ordinateur central, d'un premier numéro de transaction unique généré par le dispositif lecteur de disques pendant la précédente transaction de données,
c) la génération au niveau de l'ordinateur central d'un code de gestion des droits d'auteur numérique sur la base du numéro d'identification unique et du premier numéro de transaction unique et l'envoi de celui-ci au dispositif lecteur de disques,
d) la réception, en provenance du dispositif lecteur de disques, au niveau de l'ordinateur central, d'une notification en provenance du dispositif lecteur de disques selon laquelle un client a visionné au moins un programme vidéo à partir du disque ;
e) la réception, en provenance du dispositif lecteur de disques, au niveau de l'ordinateur central, d'un second numéro de transaction unique qui a été généré par le dispositif lecteur de disques,
f) la génération, au niveau de l'ordinateur central, d'un code de gestion des droits d'auteur numérique, sur la base du numéro d'identification unique et du second numéro de transaction unique et l'envoi de celui-ci au dispositif lecteur de disques,
dans lequel le client doit payer un droit de visionnage uniquement pour les programmes vidéo visionnés par le client conformément à ladite notification reçue.

2. Procédé selon la revendication 1, dans lequel la production comprend l'enregistrement sur les disques de multiples films récemment sortis.

3. Procédé selon la revendication 1, dans lequel la fourniture des disques aux clients comprend la distribution des disques de films aux clients sur une base périodique.

4. Procédé selon la revendication 3, dans lequel la fourniture des disques au client comprend la distribution des disques de films aux clients sur une base mensuelle.

5. Procédé selon la revendication 1, dans lequel la production comprend l'enregistrement sur les disques de films classiques/anciens.

6. Procédé selon la revendication 5, dans lequel la fourniture des disques aux clients comprend la possibilité pour les clients de commander les disques de films anciens qu'ils ont sélectionnés.

7. Procédé selon la revendication 1, dans lequel la procédure d'enregistrement définie est une procédure propriétaire.

8. Procédé selon la revendication 1, dans lequel la production des disques comprend le cryptage des données de programmes vidéo numériques sur les disques.

9. Procédé selon la revendication 1, dans lequel, lorsque l'ordinateur central envoie ledit code audit dispositif lecteur, l'ordinateur central envoie également audit dispositif lecteur des instructions à propos de la quantité de crédit disponible que le dispositif lecteur peut utiliser.

10. Procédé selon la revendication 1, comprenant en outre la réception par l'ordinateur central de données d'identification des programmes vidéo qui ont été lus sur le dispositif lecteur, lorsque le dispositif lecteur transmet le premier numéro d'identification à l'ordinateur central.

11. Procédé selon la revendication 10, comprenant la réception au niveau de l'ordinateur central d'informations identifiant une ou plusieurs dates et heures pour chaque programme vidéo lu sur le dispositif lecteur, lorsque le dispositif lecteur transmet son premier numéro d'identification à l'ordinateur central.

12. Procédé selon la revendication 1, comprenant en outre la fourniture au dispositif lecteur d'un premier tableau répertoriant les règles de tarification standard pour une première catégorie de programmes vidéo.

13. Procédé selon la revendication 12, comprenant en outre la fourniture à chaque dispositif lecteur d'un second tableau répertoriant les règles de tarification exceptionnelle pour une seconde catégorie de programmes vidéo.

14. Système de distribution de programmes vidéo numériques à une pluralité de clients, **caractérisé par** :
des moyens de production, sous l'autorité du fournisseur de contenu, de disques comprenant des programmes vidéo multiples enregistrés sur les disques,
des moyens pour fournir les disques aux clients,
des moyens pour effectuer, si le client a visionné des programmes vidéo enregistrés sur les disques, la transaction de données suivante entre un dispositif lecteur de disques utilisé par le client pour visionner les programmes vidéo et un ordinateur central :
a) la réception, en provenance du dispositif lecteur de disques, au niveau de l'ordinateur central, d'un numéro d'identification unique identifiant le dispositif lecteur de disques de l'utilisateur ; et
b) la réception, en provenance du dispositif lecteur de disques, au niveau de l'ordinateur central, d'un premier numéro de transaction unique généré par le dispositif lecteur de disques lors de la précédente transaction de données,
c) la génération, au niveau de l'ordinateur central, d'un code de gestion des droits d'auteur numérique sur la base du numéro d'identification unique et du premier numéro de transaction unique, et l'envoi du code de gestion des droits d'auteur numérique au dispositif du lecteur de disques,
d) la réception, en provenance du dispositif lecteur de disques, au niveau de l'ordinateur central, d'une notification en provenance du dispositif lecteur de disques selon laquelle un client a visionné au moins un programme vidéo à partir des disques,
e) la réception, en provenance du dispositif lecteur de disques, au niveau de l'ordinateur central, d'un second numéro de transaction unique généré par le dispositif lecteur de disques,
f) la génération, au niveau de l'ordinateur central, d'un code de gestion des droits d'auteur numérique, sur la base du numéro d'identification unique et du second numéro de transaction unique, et l'envoi de celui-ci au dispositif lecteur de disques, et
des moyens pour faire payer au client un droit de visionnage ne concernant que les programmes vidéo visionnés par le client conformément à ladite notification reçue.

15. Système selon la revendication 14, dans lequel les moyens de production comprennent des moyens destinés à enregistrer sur les disques de multiples films récemment sortis.

16. Système selon la revendication 14, dans lequel les moyens de fourniture des disques aux clients comprennent des moyens pour distribuer les disques de films aux clients sur une base périodique.

17. Système selon la revendication 16, dans lequel les moyens de fourniture des disques aux clients comprennent des moyens pour distribuer les disques de films aux clients sur une base mensuelle.

18. Système selon la revendication 14, dans lequel les moyens de production comprennent des moyens pour enregistrer sur les disques des films classiques/anciens.

19. Système selon la revendication 18, dans lequel les moyens pour fournir les disques au client comprennent des moyens pour permettre que les clients commandent les disques de films anciens qu'ils ont sélectionnés.

20. Système selon la revendication 14, dans lequel les programmes vidéo multiples sont enregistrés sur les disques à l'aide d'une procédure d'enregistrement propriétaire.

21. Système selon la revendication 14, dans lequel les moyens pour produire les disques comprennent des moyens pour crypter les données de programmes vidéo numériques sur les disques.

22. Système selon la revendication 14, dans lequel, lorsque l'ordinateur central envoie ledit code audit dispositif lecteur, l'ordinateur central envoie également audit dispositif lecteur des instructions concernant la quantité de crédit disponible que le dispositif lecteur peut utiliser.

23. Système selon la revendication 14, comprenant en outre des moyens pour que l'ordinateur central reçoive des données identifiant les programmes vidéo qui ont été lus sur le dispositif lecteur, lorsque le dispositif lecteur transmet le premier numéro d'identification à l'ordinateur central.

24. Système selon la revendication 23, comprenant des moyens de réception au niveau de l'ordinateur central d'informations identifiant une ou plusieurs dates et heures pour chaque programme vidéo lu sur le dispositif lecteur, lorsque le dispositif lecteur transmet son premier numéro d'identification à l'ordinateur central.

25. Système selon la revendication 14, comprenant en outre des moyens pour fournir au dispositif lecteur un premier tableau répertoriant les règles de tarification standard pour une première catégorie de programmes vidéo.

26. Système selon la revendication 25, comprenant en outre des moyens pour fournir à chaque dispositif lecteur un second tableau répertoriant les règles de tarification exceptionnelle pour une seconde catégorie de programmes vidéo.
